# EUROPEAN PATENT SPECIFICATION

(11) **EP 0 746 447 B1**
(45) Date of publication and mention of the grant of the patent: **18.04.2001**
(21) Application number: 95908699.2
(22) Date of filing: 27.01.1995
(51) Int. Cl.: B24D 3/28, B24D 11/02, B29C 53/66

(54) **COATED ABRASIVES AND METHODS OF MAKING SAME**
BESCHICHTETE SCHLEIFMITTEL UND VERFAHREN ZU DESSEN HERSTELLUNG
ABRASIFS SUR SUPPORT ET LEURS PROCEDES DE FABRICATION

(30) Priority: 22.02.1994 US 199679
(43) Date of publication of application: 11.12.1996
(73) Proprietor: MINNESOTA MINING AND MANUFACTURING COMPANY, St. Paul, Minnesota 55133-3427 (US)
(72) Inventor: BENEDICT, Harold, W., Saint Paul, MN 55133-3427 (US); HEACOX, Gary, L., Saint Paul, MN 55133-3427 (US); TRUDEAU, Timothy, J., Saint Paul, MN 55133-3427 (US); BANGE, Donna, W., Saint Paul, MN 55133-3427 (US)
(74) Representative: VOSSIUS & PARTNER
(86) International application number: US9501082
(87) International publication number: WO9522434

(56) References cited:
- EP-A- 0 142 140
- EP-A- 0 213 353
- WO-A-93/12911
- FR-A- 2 250 049
- US-A- 2 743 559
- US-A- 5 109 638

## Description

The present invention pertains to coated abrasive articles, and particularly to coated abrasive articles comprising abrasive particles adhered to an organic polymeric binder, the binder having a fibrous reinforcing material therein. Additionally, this invention pertains to methods of making such articles.

Coated abrasive articles generally contain an abrasive material, typically in the form of abrasive grains, bonded to a previously made backing by means of one or more adhesive layers. The adhesive layers and abrasive grains are conventionally applied to the backing in separate step(s) after the backing has been formed. Such articles usually take the form of sheets, discs, belts, bands, and the like, which can be adapted to be mounted on pulleys, wheels, or drums. Abrasive articles can be used for sanding, grinding, or polishing various surfaces of, for example, steel and other metals, wood, wood-like laminates, plastic, fiberglass, leather, or ceramics.

The backings used in coated abrasive articles are typically made of paper, polymeric materials, cloth, nonwoven materials, vulcanized fiber, or combinations of these materials. Many of these materials provide unacceptable backings for certain applications because they are not of sufficient strength, flexibility, or impact resistance. Also, some are sensitive to liquids that are used as coolants and cutting fluids. As a result, early failure and poor functioning can occur in certain applications.

In a typical manufacturing process for the above-mentioned conventional coated abrasives, a coated abrasive article is made by feeding a preformed backing in a continuous web form through a series of coating and curing steps wherein binder layers and abrasive particles are applied. The coated web is then converted into a desired construction, such as a sheet, disc, belt, or the like. One of the most useful constructions of a coated abrasive article is an endless coated abrasive belt, i.e., a continuous loop of coated abrasive material. In order to form such an endless belt, the web form is typically cut into an elongate strip of a desired width and length. The ends of the elongate strip are then joined together to create a "joint" or a "splice."

PCT International Publication No. WO 93/12911, published 8 July 1993, discloses fiber reinforced polymeric backings and coated abrasives employing same. In producing the backing, the fibers are engulfed by a polymer and the polymer is then solidified or cured, depending on the polymer's chemistry. Abrasive particles are then adhered to the backing by a subsequent resin coating applied to the backing (sometimes referred to as a "make" coating), typically a resole phenolic resin. The abrasive articles and methods of making same described in W0 93/12911 thus require a separate make coating step. Further, the procedures for making the fiber reinforced backings are essentially batch procedures.

It would be advantageous if fiber reinforced coated abrasive articles could be made by eliminating the step of applying a separate make coating to a preformed backing, and if the process of making a coated abrasive having a fiber reinforced backing could be either a batch process or a continuous web process.

The present invention is directed to fiber reinforced coated abrasive articles which may be either endless seamless belts, endless seamed belts, discs, sheets, daisies, and the like, depending on the process used to make them. By the phrase "endless, seamless" it is meant that article embodiments of this nature are in the form of a continuous structure throughout their length. That is, it is free from any distinct splices or joints. This does not mean, however, that there are no internal splices in, for example, a fibrous reinforcing layer, or that there are no splices in an abrasive layer. Rather, it means that there are no splices or joints in the fibrous reinforcement that result from joining the ends of an elongate strip of material. Coated abrasive articles of the invention which are endless, seamless belts do not exhibit many of the disadvantages associated with coated abrasive belts made from preformed backing loops containing a splice.

The first embodiment of the inventive coated abrasive articles comprises:
(a) a member having first and second major surfaces and a middle portion extending between said major surfaces, said middle portion comprising an effective amount of a fibrous reinforcing material engulfed in a single organic polymeric binder, the binder defining a region adjacent said first major surface substantially free of the fibrous reinforcing material;
(b) a plurality of abrasive particles partially embedded in said binder on said first major surface, the majority of said particles protruding from said binder and
(c) an optional size coating overlying the abrasive particles and binder of said first major surface.

The organic polymeric binder used in the invention thus serves both as a treatment for the reinforcing fibers and to provide means to secure/adhere the abrasive particles to the article. The organic polymeric binder is a treatment for the reinforcing fibers in the sense that at least one of the following functions is performed:
1) improved adhesion of the abrasive particles to an article having reinforcing fibers therein;
2) protection of fibers, both from the grinding interface and from "backwear" (such as when an endless belt traverses over a support platen); and
3) adheres individual fibers together or to other separate fibrous reinforcements within the confines of the organic polymeric binder.

It is preferred that coated abrasives of the invention be endless, seamless belts or loops. However, it is within the scope of this invention to make the coated abrasive on a web making process and then convert the web into spliced belts, discs, sheets, daisies and the like.

Coated abrasive articles of the invention can readily be prepared with substantially the same thickness or caliper along the entire article. Typically, the thickness of endless, seamless articles of the present invention does not vary by more than about 15% along the entire length of the loop.

Although there is no separate distinct resin boundary between the portion of the final abrasive articles of the invention normally termed a "backing" and the abrasive surface, the coated abrasive articles of the present invention may be described as including a "substantially planar member" which contains an organic polymeric binder material which either substantially engulfs, or is distributed throughout, a fibrous reinforcing material. (By substantially planar is meant that the member is generally sheet-like in nature, having side edges which are preferably parallel.)

Typically and preferably, the binder weight in the planar member is within a range of about 40-99 wt-%, preferably within a range of about 50-95 wt-%, more preferably within a range of about 65-92 wt-%, based on the total weight of the member. The polymeric binder material can be a thermosetting, thermoplastic, or elastomeric material or a combination thereof. Preferably it is a thermosetting material. In some instances, the use of a combination of a thermosetting material and an elastomeric material is preferable.

The remainder of a typical, preferred, planar member is primarily fibrous reinforcing material. Although there may be additional components added to the binder composition, a coated abrasive of the present invention primarily comprises abrasive particles adhered to one major surface of an organic polymeric binder having an effective amount of a fibrous reinforcing material engulfed therein. The articles of the invention thus have an abrasive surface and a nonabrasive surface. The phrase "effective amount" of fibrous reinforcing material refers to an amount sufficient to give the desired physical characteristics of the inventive articles such as reduction in stretching or splitting during use, which may subject the articles to temperatures up to 80°C and grinding pressures up to 196,2 N/cm² (20 kg/cm²). Typical grinding pressure used ranges from about 3,43 to about 6,87 N/cm² (0.35 to about 0.70 kg/cm²).

Similar to WO 93/12911, the organic polymeric binder material and fibrous reinforcing material together comprise a flexible composition, which may be in the form of an endless, seamless loop with generally parallel side edges. However, in the presently claimed invention, the organic polymeric binder also is present in sufficient amount to function as the binding medium for abrasive particles which, as explained further herein, are applied when the binder is still in an uncured and/or unsolidified state. The flexible coated abrasives of the present invention typically include at least one layer of fibrous reinforcing material along the entire length or area of the article. This layer of fibrous reinforcing material is preferably substantially completely surrounded by (i.e., engulfed within) the organic polymeric binder material. That is, the layer of fibrous reinforcing material is embedded or engulfed within the internal structure of the article, i.e., within the body of the article, such that there is excess organic binder material which results in regions of organic binder material free of fibrous reinforcing material on opposite surfaces of the layer of fibrous reinforcing material. In addition, during the manufacture of the articles of the present invention, one surface of the member free of fibrous reinforcing material is provided sufficient binder to bind abrasive particles thereto. In this way, one surface, e.g., the inner surface of an endless loop made on a support structure, has a generally smooth, uniform surface topology, while the opposite surface has adhered thereto an abrasive surface. Thus, the step of applying a separate make coating precursor and equipment required therefore are eliminated.

The fibrous reinforcing material can be in the form of individual fibrous strands or a fibrous mat structure. The coated abrasive articles of the present invention preferably consist of various layers of individual fibrous reinforcing strands and/or fibrous mat structures incorporated within, i.e., engulfed within, an internal structure or body of the article. Preferred belts contain, for example, a thermosetting binder, a layer of noninterlacing parallel and coplanar individual fibrous reinforcing strands, and a layer of a fibrous mat structure wherein the fibrous material within one layer does not interlock with the fibrous material within the other layer.

Certain preferred coated abrasive belts of the present invention also contain a barrier sheet, such as paper or polymeric film, adhered to the article on the surface opposite the abrasive particles. The barrier sheet can be laminated with an adhesive to the article or, more preferably, adhered using the organic polymeric binder while the binder is still in its flowable state. These embodiments of the coated abrasive articles of the present invention are advantageous because of the ease in removing the article from a support apparatus used to produce the articles in batch mode, for aesthetic reasons, and as an inexpensive way of increasing the tear strength of the articles of the invention. Further, especially when the binder material is a thermoset resin and the article is an endless belt, "platen compatibility" and backwear from drive rolls become increasingly important issues, since thermosets generally have a higher coefficient of friction than thermoplastics. If the frictional wear or backwear is too great, damage to the backside (nonabrasive side) of the belts may occur, which of course is not preferred.

The coated abrasives of the present invention may be prepared by either of two methods: batch and continuous. In batch processes, generally an endless belt structure comprising liquid organic binder precursor material having fibrous reinforcing material therein is prepared in extension around a periphery of a support structure, such as a drum. A sufficient amount of the liquid organic binder precursor material is applied so that not only is all of the fibrous reinforcement engulfed by the binder precursor, but a layer of uncured binder precursor is built up on the external surface of the article. At this stage, depending on the organic polymer chemistry of the binder precursor, the article may optionally be exposed to conditions to partially cure or gel the binder precursor so that it becomes tacky enough to hold abrasive particles thereto (the binder precursor may be tacky enough without such exposure). While still in the uncured state the article is then rotated while being exposed to a stream of abrasive particles, applied electrostatically, magnetically, or by drop coating, such that a majority of the abrasive particles protrude from the binder precursor. The article is then exposed to conditions sufficient to solidify the binder precursor to form a flexible, solidified, abrasive belt article having fibrous reinforcing material therein. Electrostatic coating is preferred since during electrostatic coating, electrostatic charges are applied to the abrasive particles and this propels the abrasive particles toward the binder precursor-coated article. Electrostatic coating tends to orient the abrasive particle, which tends to lead to better abrading performance. In drop coating, the abrasive particles are forced from a feed station and fall into the binder precursor by gravity. It is also within the scope of this invention to propel the abrasive particles toward and into the binder precursor by a mechanical force. Magnetic coating involves using magnetic fields to force abrasive particles toward and into the binder precursor.

If the abrasive particles are applied by electrostatic coating, then it is preferred that the member be placed on a drum. This drum is preferably the original support structure used for producing the article or it can be a different drum. The drum serves as an electrical ground for the electrostatic coating process. The proper amount of abrasive particles is then placed on a plate or surface underneath the drum. Next, the drum is rotated and the electrostatic field is turned on. As the drum rotates, the abrasive particles are forced off of the plate and forced to move by the electric field toward the binder precurser, and become embedded into the binder precursor. The drum is rotated until the desired amount of abrasive particles are coated. The resulting construction is exposed to conditions sufficient to solidify the binder precursor. A majority of the abrasive particles should protrude out of the binder. This means that, for a majority of the total number of abrasive particles, a portion of the abrasive particle is embedded into the binder, while another portion of the abrasive particle protrudes out of the binder. Preferably, all abrasive particles will protrude from the binder, but this is not always ensured depending on the technique used. This results in an oriented abrasive particle that tends to lead to better performance. There may be a few abrasive particles totally embedded into the binder that do not protrude out of the binder. However the majority, preferably greater than 50% of the abrasive particles protrude out of the binder.

The abrasive particles lie substantially in a second plane adjacent the first plane. There may be more than one layer of abrasive particles, but these abrasive particles are generally close enough together to form a plane. Generally, the planes of reinforcing fibers and abrasive particles are parallel to one another and do not intersect. Thus, the abrasive particles are positioned such that they are not in the plane of reinforcing fibers and the abrasive particles are not present between any of the reinforcing fibers.

The flexible, solidified abrasive belts formed in batch processes of the invention have an outer and an inner surface. The step of preparing a loop of liquid organic binder material having fibrous reinforcing material therein preferably includes the steps of: applying a fibrous reinforcing mat structure around the periphery of a support structure, such as a drum; and winding one individual reinforcing strand around the periphery of the support structure, e.g., drum, in the form of a helix in longitudinal extension around the loop, i.e., along the length of the loop, in a layer that spans the width of the loop.

An alternative and preferred batch method of preparing the endless, seamless loops of the present invention includes coating, i.e., impregnating, a fibrous, reinforcing mat structure with an organic binder precursor material prior to the mat being applied around the periphery of the support structure. One method of impregnating the fibrous reinforcing material is to coat the fibers through an orifice or knife coater with the binder precursor material. If the organic binder material is a solid material at room temperature (about 20-25 °C), such as a thermoplastic material, the step of preparing a loop of organic binder material having fibrous reinforcing material therein includes: applying a first layer of a solid organic binder material around the periphery of a support structure, preferably a drum; applying a layer of fibrous reinforcing material around the first layer of solid organic polymeric binder material on the support structure; applying a second layer of a solid organic polymeric binder material around the first layer of solid organic polymeric binder material and the layer of fibrous reinforcing material on the support structure to form a structure of a solid organic polymeric binder material having a layer of fibrous reinforcing material therein; heating the solid organic polymeric binder material until it flows and generally forms a melt of thermoplastic organic polymeric binder precursor material having fibrous reinforcing material therein; exposing the article to a stream of abrasive particles, such that a majority of the particles protrude as explained above; and exposing the article to conditions sufficient to cure or solidify the organic binder precursor material.

The term "solid" or "solidified" refers to a material that does not readily flow under ambient temperatures and pressures, and is meant to include a thixotropic gel.

In preferred embodiments, an adhesive layer (sometimes referred to as a "size" coating) is applied over the abrasive particles, either before or after the liquid organic polymeric binder has solidified, and both the binder and size adhesive are fully solidified. In certain preferred applications of the present invention, a second adhesive layer (sometimes referred to as a "supersize") can be applied if desired.

Similar batch methods can also be used in preparing a coated abrasive using a support structure, such as a conveyor system. Such a system would typically use, for example, a stainless steel sleeve, in the form of a conveyor belt. In this embodiment, the step of preparing a loop of liquid organic binder material includes preparing the loop around the conveyor belt.
The second method of making abrasive articles of the invention is a continuous process, sometimes referred to herein as "web" process. In this process, a fibrous reinforcing material, e.g., a roll of nonwoven material, is traversed through an organic binder precursor. The binder precursor is applied in sufficient amount to generally wet and essentially engulf the fibrous reinforcing yarns. Then abrasive particles are coated into the binder precursor, preferably by an electrostatic coater, such that a majority of the particles protrude therefrom. Then the resulting construction is exposed to conditions to solidify the binder precursor. An optional size coating precursor may be coated over the abrasive particles by any conventional technique, such as a roll coater. The resulting construction is then subjected to conditions to solidify the size coating precursor, then typically wound into a roll. Further processing may then occur such as the addition of a supersize coating, additional curing, flexing and/or humidification. After this optional further processing, the coated abrasive in web form can be converted into the desired form or shape.
Fig. 1 is an enlarged fragmentary cross-sectional view of a first coated abrasive embodiment according to the present invention;
Fig. 2 is perspective view (with parts broken away) of an endless, seamless coated abrasive containing both a fibrous reinforcing mat structure and a layer of a continuous fibrous reinforcing strand engulfed within a thermosetting resin;
Fig.3 is an enlarged fragmentary cross-sectional view of an endless, seamless coated abrasive according to the present invention taken generally along line 4-4, Fig. 2.
Fig. 4 is an enlarged fragmentary cross-sectional view of an endless, seamless coated abrasive according to the present invention taken generally analogously along line 4-4, Fig.2,
Fig. 5 is an enlarged fragmentary cross-sectional view of an endless, seamless coated abrasive according to the present invention taken generally analogously along line 4-4, Fig. 2;
Fig. 6 is a side view of an apparatus for applying the binder precursor to a drum;
Fig. 7 is a schematic of a preferred process of the present invention for applying a thermosetting binder precursor to a fibrous reinforcing mat structure and a layer of a continuous fibrous reinforcing strand such that they are both engulfed within the thermosetting resin;
Fig. 8 is a schematic of a preferred process of the present invention for applying a thermosetting binder precursor to a reinforcing yarn which is subsequently wound onto the reinforcing mat such that they are both engulfed within the thermosetting resin;
Fig. 9 is a schematic of an alternative of the process depicted in Fig. 7;
Fig. 10 is a perspective view (with parts broken away) of another embodiment of an endless, seamless coated abrasive of the invention wherein reinforcing yarns are located only near the center of the article;
Fig. 11 is a perspective view (with parts broken away) of still another embodiment of an endless, seamless abrasive article wherein reinforcing yarns are located only at the edges of the loop;
Fig. 12 is a perspective view (with parts broken away) of yet another embodiment of an endless, seamless coated abrasive wherein one region comprises a binder, a reinforcing strand and a reinforcing mat, and the second region comprises only a binder and a reinforcing mat; and
Fig. 13 is a schematic (reduced) of a preferred continuous web process of the present invention for making coated abrasive articles of the invention; and
Fig. 14 is a side elevation view (reduced) of an apparatus useful for electrostatic projection of abrasive particles onto an article formed using the processes depicted in Figs. 7 and 9.

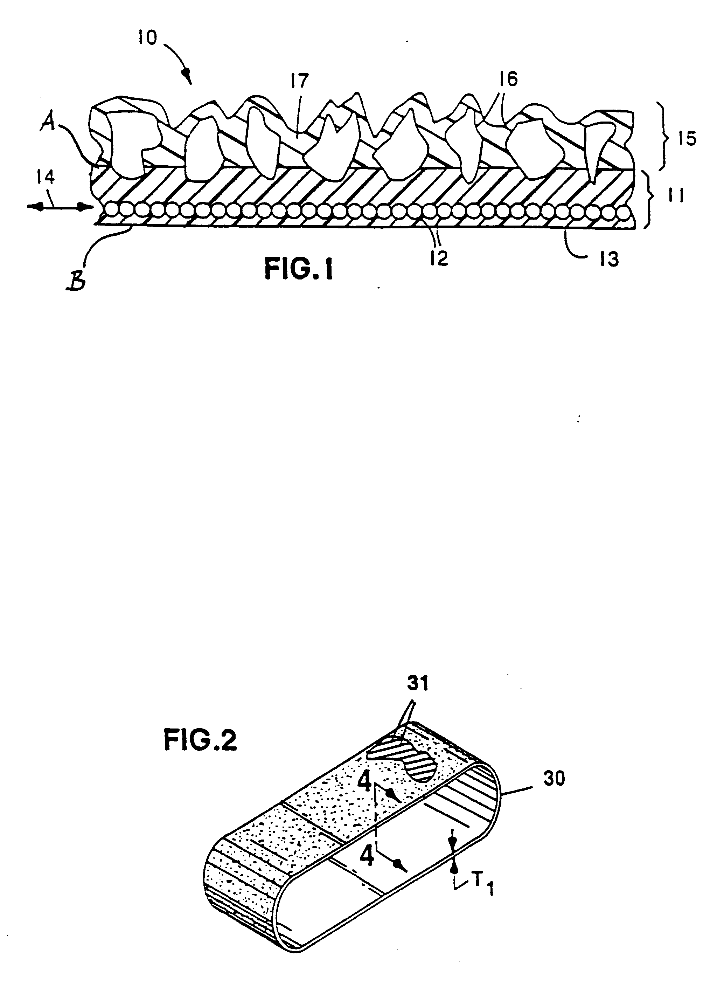

An embodiment of coated abrasive articles of the invention is illustrated in enlarged cross-section in Fig. 1. Referring to Fig. 1, coated abrasive article embodiment 10 comprises a member 11 with first and second major surfaces A, B comprised of fibers 12 and binder 13. In articles of this invention there is no separate and distinct make coating since binder 13 serves two purposes: to engulf fibers 12 of the fibrous reinforcement, and to present sufficient binder to adhere abrasive particles to member 11. Reinforcing fibers 12 lie substantially in a first plane 14. Binder 13 substantially engulfs reinforcing fibers 12, that is, binder 13 surrounds the fibers, although it is conceivable that fibers 12 could be separated so as to have substantial penetration of binder 13 between fibers. Over binder 13 is an abrasive surface coating 15 comprised of abrasive particles 16 and size coating binder 17. Abrasive particles 16 are partially embedded in binder 13, but lie mostly in and form abrasive surface coating 15 on said major surface A.

An advantage of endless belt articles of the present invention over "conventional coated abrasive belts is the reduced tendency for edge shelling on small width belts. Shelling is the term used to describe the premature release of abrasive particles. Shelling is generally undesirable because it reduces the useful life of the coated abrasive. The problem is particularly troublesome in belts that have widths of one inch or less, as the edges of these belts will sometime shell to a greater extent than wider belts. The present invention reduces this tendency because the belt edges are very flexible and conformable. This flexibility is attributed to the make coating engulfing the reinforcing fibers and serving to bond the abrasive particles to the reinforcing fibers.

The length of the inventive coated abrasive endless belts can be any desired length. Typically. it is about 40-1500 centimeters (cm). The thickness of coated abrasive articles preferably does not vary by more than about 15% from location to location.

### Coated Abrasive Properties

The coated abrasive articles of the present invention generally have the following properties. The articles are sufficiently heat resistant under grinding conditions for which the abrasive article is intended to be used such that it does not significantly disintegrate, i.e., split, break, delaminate, tear, or a combination of these, as a result of the heat generated during a grinding, sanding, or polishing operation. The articles are also sufficiently tough such that they will not significantly crack or shatter from the forces encountered under grinding conditions for which the abrasive article is intended to be used. That is, it is sufficiently stiff to withstand typical grinding conditions encountered by coated abrasive belts, but not undesirably brittle.

Preferred articles of the present invention are sufficiently flexible to withstand grinding conditions. By "sufficient flexibility" and variants thereof in this context, it is meant that articles of the invention are formulated to be capable of conforming to the work piece being abraded. For example, a continuous "flexible" article is one that is sufficiently flexible to be used on one (or more) roller mounts or a two (or more) pulley mounts in a grinder. Furthermore, for preferred grinding applications, the articles are capable of flexing and adapting to the contour of the workpiece being abraded, yet sufficiently strong to transmit an effective grinding force when pressed against the workpiece.

Preferred coated abrasive articles of the present invention possess a generally uniform tensile strength in the longitudinal, i.e., machine direction. More preferably, the tensile strength for any portion of an article of the invention tested does not vary by more than about 20% from that of any other portion of the article. Tensile strength is generally a measure of the maximum stress a material subjected to a stretching load can withstand without tearing.

Preferred articles of the present invention also exhibit appropriate shape control and are sufficiently insensitive to environmental conditions, such as humidity and temperature. By this it is meant that preferred coated abrasives of the present invention possess the above-listed properties under a wide range of environmental conditions. Preferably, they possess the above-listed properties within a temperature range of about 10-30°C, and a humidity range of about 30-50% relative humidity (RH). More preferably, they possess the above-listed properties under a wide range of temperatures, i.e., from below 0°C to above 100°C, and a wide range of humidity values, from below 10% RH to above 90% RH.

The preferred organic polymeric binder material used in coated abrasives of the present invention is generally chosen such that there will be compatibility with, and good adhesion to, any subsequently applied adhesive layers, particularly to the size coat. Good adhesion is determined by the amount of shelling of the abrasive material. Although the choice of organic polymeric material is important, the amount of shelling typically depends to a greater extent on the choice of subsequently applied adhesive and the compatibility of the organic polymeric binder and adhesive layers.

In preferred article embodiments of the present invention, the organic polymeric binder material is present in a sufficient amount to substantially engulf the fibrous reinforcing material that is present in at least one generally distinct layer across the width, and along the entire length, of the articles. In this way, there is no fibrous reinforcing material exposed, i.e., there are regions of organic polymeric binder material devoid of fibrous reinforcing material. Embodiments also considered within the scope in the invention are those articles wherein there exist spaces between reinforcing fibers filled with organic polymeric binder and any optional additives. Embodiments wherein the fibers are adjacent (i.e., no organic polymeric binder there between) are also within the invention. There may be regions devoid of fibers and binder within the plane comprised of reinforcing fibers and binder, such as open pores, or filler regions.

In preferred articles of the present invention, the organic polymeric binder (which engulfs or is distributed throughout the fibrous reinforcement) is present in a sufficient amount to generally seal the surfaces of the article, although the article may have some porosity between the sealed surfaces as long as the tensile strength and other mechanical properties are not deleteriously effected. As used herein the term "seal" means that a liquid, such as water, cannot penetrate into the coated abrasives of the invention through the back side (non-abrasive side) and out of the abrasive side of the article. Further, there must be sufficient organic polymeric binder to adhere the abrasive particles to the reinforcing yarns. Further, the amount of binder in the member is sufficient to form a layer or reservoir sufficient to accept and hold a plurality of abrasive particles on substantially one plane of the abrasive article. In other words, abrasive particles are not present throughout the member, but only on one surface thereof.

The abrasive particles are preferably present as a substantially continuous layer, although it is within the invention to coat the abrasive particles in a pattern, i.e., forming areas devoid of abrasive particles. In the case where electrostatic coating is used, for example, a screen may be placed between the surface on which the abrasive articles lie and the binder precursor. Other methods will be apparent to those skilled in the art.

### Fibrous Reinforcement Binder

The abrasive articles of the present invention contain a fibrous reinforcing material engulfed by a binder 13 (see Fig. 1) which also functions as would a traditional "make" coating. The binder material is an organic polymeric binder material. It can be a cured or solidified thermosetting resin, thermoplastic material, or elastomeric material. Preferably, the organic polymeric binder material is a cured or solidified thermosetting resin or thermoplastic material. More preferably, the organic polymeric binder material is a thermosetting resin, at least because such resins can be provided in a very fluid (low viscosity) flowable form when uncured, even under ambient conditions. Herein, the phrase "ambient conditions" and variants thereof refer to room temperature, i.e, 15-30°C, generally about 20-25°C, and 30-50% relative humidity, generally about 35-45% relative humidity.

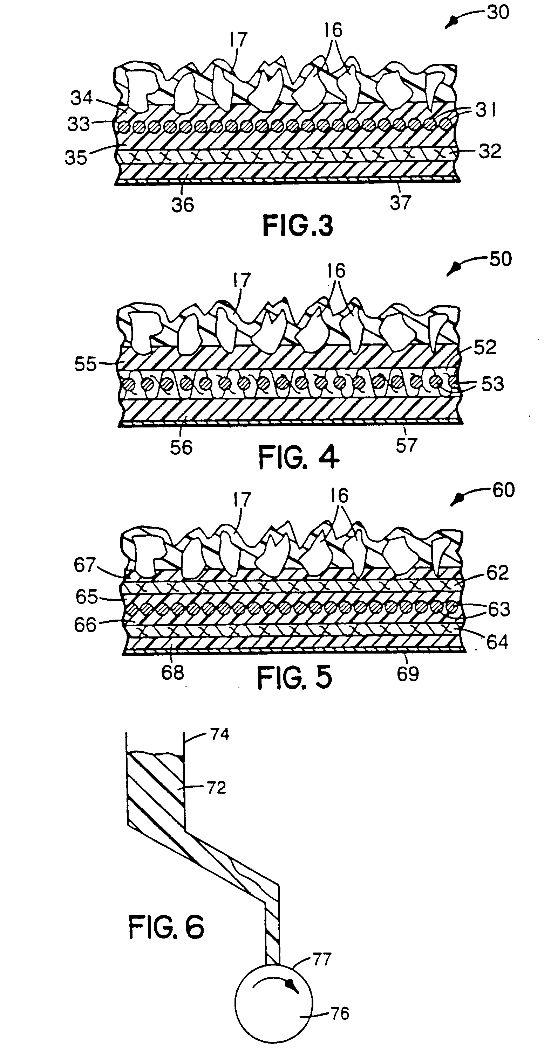

If the organic polymeric binder material 13 includes a cured thermosetting resin, prior to the manufacture of the inventive articles the thermosetting resin is in a nonpolymerized or only partially polymerized state, typically in a liquid or semi-liquid or gel state. The procedures articulated in Figs. 6-9 are preferably employed when using thermosetting resins.

Examples of thermosetting resins from which binder 13 can be prepared include phenolic resins, amino resins, polyester resins, aminoplast resins, urethane resins, melamine-formaldehyde resins, epoxy resins, acrylated isocyanurate resins, urea-formaldehyde resins, isocyanurate resins, acrylated urethane resins, acrylated epoxy resins or mixtures thereof. The preferred thermosetting resins are epoxy resins, urethane resins, polyester resins, or flexible phenolic resins. The most preferred resins are epoxy resins and urethane resins, at least because they exhibit an acceptable cure rate, flexibility, good thermal stability, strength, and water resistance. Furthermore, in the uncured state, typical epoxy resins have low viscosity, even at high percent solids. Also, there are many suitable urethanes available at high percent solids.

One preferred class of binder is the class of polyurethane elastomers. Examples of such polyurethane materials are commercially available from Uniroyal Chemical under the trade designation "Vibrathane". These polyurethane elastomers are formed from prepolymers that can be a polyether based upon toluene diisocyanate terminated prepolymer or a polyether based upon diphenylmethane diisocyanate. These prepolymers can be crosslinked with 4,4"-methylene-bis-(ortho-chloroaniline) or a diamine curative. The polyurethane binders are also preferred, because during thermal curing the polyurethane resins do not appreciably reduce their viscosity and thus do not appreciably flow during curing. It is also within the scope of this invention to blend polyurethane resins with epoxy resins.

Phenolic resins are usually categorized as resole or novolac phenolic resins. Examples of useful commercially available phenolic resins are "Varcum" from BTL Specialty Resins Corporation, Blue Island, IL; "Arofene" from Ashland Chemical Company, Columbus, OH; "Bakelite" from Union Carbide, Danbury, CT; and "Resinox" from Monsanto Chemical Company, St. Louis, MO.

Resole phenolic resins are characterized by being alkaline catalyzed and having a molar ratio of formaldehyde to phenol of greater than or equal to 1:1. Typically, the ratio of formaldehyde to phenol is within a range of about 1:1 to about 3:1. Examples of alkaline catalysts useable to prepare resole phenolic resins include sodium hydroxide, potassium hydroxide, organic amines, or sodium carbonate.

Novolac phenolic resins are characterized by being acid catalyzed and having a molar ratio of formaldehyde to phenol of less than 1:1. Typically, the ratio of formaldehyde to phenol is within a range of about 0.4:1 to about 0.9:1. Examples of the acid catalysts used to prepare novolac phenolic resins include sulfuric, hydrochloric, phosphoric, oxalic, or p-toluenesulfonic acids. Although novolac phenolic resins are typically considered to be thermoplastic resins rather than thermosetting resins, they can react with other chemicals (e.g., hexamethylenetetraamine) to form a cured thermosetting resin.

Epoxy resins useful in the polymerizable mixture used to prepare the articles of this invention include monomeric or polymeric epoxides. Useful epoxy materials, i.e., epoxides, can vary greatly in the nature of their backbones and substituent groups. Representative examples of acceptable substituent groups include halogens, ester groups, ether groups, sulfonate groups, siloxane groups, nitro groups, or phosphate groups. The weight average molecular weight of the epoxy-containing polymeric materials can vary from about 60 to about 4000, and are preferably within a range of about 100 to about 600. Mixtures of various epoxy-containing materials can be used in the compositions of this invention. Examples of commercially available epoxy resins include "Epon" from Shell Chemical, Houston, TX; and "DER" from Dow Chemical Company, Midland, MI.

Examples of commercially available urea-formaldehyde resins include "Uformite" from Reichhold Chemical, Inc., Durham, NC; "Durite" from Borden Chemical Co., Columbus, OH; and "Resimene" from Monsanto, St. Louis, MO. Examples of commercially available melamine-formaldehyde resins include "Uformite" from Reichhold Chemical, Inc., Durham, NC; and "Resimene" from Monsanto, St. Louis, MO. "Resimene" is used to refer to both urea-formaldehyde and melamine-formaldehyde resins.

Examples of aminoplast resins useful in applications according to the present invention are those having at least one pendant a,b-unsaturated carbonyl group per molecule, which are, for example, as disclosed in U.S. Patents 4,903,440 and 5,236,472.

Useable acrylated isocyanurate resins are those prepared from a mixture of: at least one monomer selected from the group consisting of isocyanurate derivatives having at least one terminal or pendant acrylate group and isocyanate derivatives having at least one terminal or pendant acrylate group; and at least one aliphatic or cycloaliphatic monomer having at least one terminal or pendant acrylate group. These acrylated isocyanurate resins are described, for example, in U.S. Patent 4,652,274.

Acrylated urethanes are diacrylate esters of hydroxy terminated -NCO- extended polyesters or polyethers. Examples of commercially available acrylated urethanes useful in applications of the present invention include those having the trade names "Uvithane 782," available from Morton Thiokol Chemical, Chicago, IL, "Ebecryl 6600," "Ebecryl 8400," and "Ebecryl 88-5," available from Radcure Specialties, Atlanta, GA.

The acrylated epoxies are diacrylate esters, such as the diacrylate esters of bisphenol A epoxy resin. Examples of commercially available acrylated epoxies include those having the trade names "Ebecryl 3500," "Ebecryl 3600," and "Ebecryl 8805," available from Radcure Specialties, Atlanta, GA.

Suitable thermosetting polyester resins are available as "E-737" or "E-650" from Owens-Corning Corp., Toledo, OH. Suitable polyurethanes are available as "Vibrathane B-813 prepolymer" or "Adiprene BL-16 prepolymer" used with "Caytur-31" curative. The polyurethane known under the trade designation "Adiprene BL-16" is a ketoxime-blocked poly-1,4-butylene glycol diisocyanate having a molecular weight of about 1500. All are available from Uniroyal Chemical, Middlebury, CT.

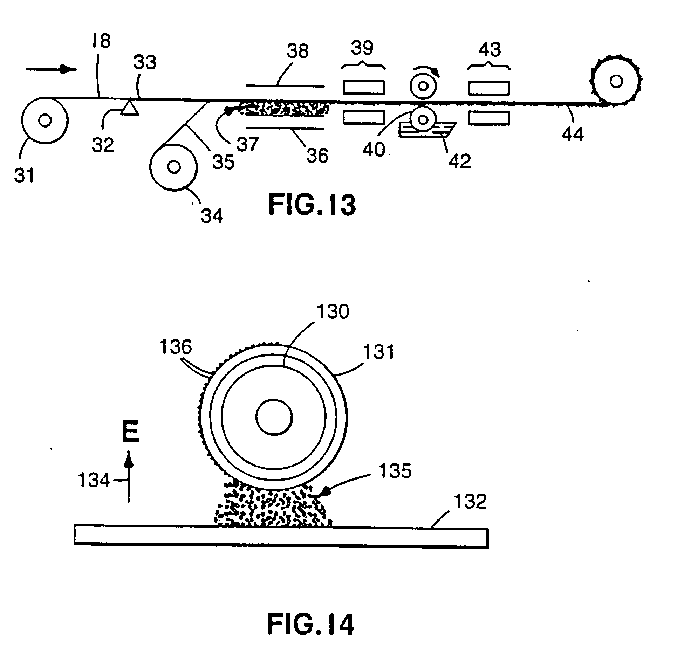

As indicated previously, in some applications of the present invention, a thermoplastic binder material can be used, as opposed to the preferred thermosetting resins discussed above. A thermoplastic binder material is a polymeric material that softens when exposed to elevated temperatures and generally returns to its original physical state when cooled to ambient temperatures. During the manufacturing process, the thermoplastic binder is heated above its softening temperature, and often above its melting temperature, to form the desired shape of the coated abrasive. After member 11 is formed, the thermoplastic binder is cooled and solidified. Thus, with a thermoplastic material, molding processes can be used to advantage, or a web process as described below in reference to Fig. 13.

Preferred thermoplastic materials for use in the invention are those having a high melting temperature and/or good heat resistant properties. That is, preferred thermoplastic materials have a melting point of at least about 100°C, preferably at least about 150°C. Additionally, the melting point of the preferred thermoplastic materials is sufficiently lower, i.e., at least about 25°C lower, than the melting temperature of the reinforcing material.

Examples of thermoplastic materials suitable for preparations of binders 13 in articles according to the present invention include polycarbonates, polyetherimides, polyesters, polysulfones, polystyrenes, acrylonitrile-butadienestyrene block copolymers, polypropylenes, acetal polymers, polyamides, polyvinyl chlorides, polyethylenes, polyurethanes, or combinations thereof. Of this list, polyamides, polyurethanes, and polyvinyl chlorides are preferred, with polyurethanes and polyvinyl chlorides being most preferred.

A third type of binder 13 useful in the inventive articles is an elastomeric material. An elastomeric material, i.e., elastomer, is defined as a material that can be stretched to at least twice its original length and then retract very rapidly to approximately its original length, when released. Examples of elastomeric materials useful in applications of the present invention include styrene-butadiene copolymers, polychloroprene (neoprene), nitrile rubber, butyl rubber, polysulfide rubber, cis-1,4-polyisoprene, ethylene-propylene terpolymers, silicone rubber, or polyurethane rubber. In some instances, the elastomeric materials can be cross-linked with sulfur, peroxides, or similar curing agents to form cured thermosetting resins.

Typically and preferably, the binder precursor is solidified by exposure to an energy source, such as thermal energy or radiation energy. For endless, splice-less coated abrasive belts of the invention made on a support structure, it is generally preferred to rotate the belt during thermal curing. This rotation minimizes the tendency of the binder precursor from flowing during curing and ultimately minimizes the shifting of the abrasive particles during curing.

It is also within the scope of this invention to dry and/or partially cure the binder precursor prior to the application of the abrasive particles. However, the binder precursor should not be dried or cured to such a degree that it will not hold the abrasive particles.

It is also within the scope of this invention that the binder precursor is not solidified or cured before the application of the size coating precursor. In this method variation, the size coating precursor is applied directly over the binder precursor and the abrasive particles. This method variation has an advantage in that it saves a processing step of not precuring the binder precursor. It is generally preferred that the size coating precursor be applied in a non-contacting method, such as spraying. After the size coating precursor is applied, the resulting construction is exposed to conditions to cure or solidify both the binder precursor and the size coating precursor. Again, it is preferred that during thermal curing that the resulting construction is rotated to help prevent the binder precursor and size coating precursor from flowing.

### Fibrous Reinforcing Material

The organic polymeric binder material 13 includes an effective amount of a fibrous reinforcing material. Herein, an "effective amount" of a fibrous reinforcing material is a sufficient amount to impart at least improvement in desirable characteristics to the articles as discussed above, but not so much as to give rise to any significant number of voids and detrimentally effect the structural integrity of the articles. Typically, the amount of the fibrous reinforcing material in the binder 13 is within a range of about 1-80 wt-%, preferably 5-50 wt-%, more preferably 8-35 wt-%, based on the total weight of binder 13 and fibers.

The fibrous reinforcing material can be in the form of fibrous strands, a fiber mat or web, or a stitchbonded or weft insertion mat. Fibrous strands are commercially available as threads, cords, yarns, rovings, and filaments. Threads and cords are typically assemblages of yarns. A thread has a very high degree of twist with a low friction surface. A cord can be assembled by braiding or twisting yarns and is generally larger than a thread. A yarn is a plurality of fibers or filaments either twisted together or entangled. A roving is a plurality of fibers or filaments pulled together either without a twist or with minimal twist. A filament is a continuous fiber. Both rovings and yarns are composed of individual filaments. A fiber mat or web consists of a matrix of fibers, i.e., fine threadlike pieces with an aspect ratio of at least about 100:1. The aspect ratio of a fiber is the ratio of the longer dimension of the fiber to the shorter dimension.

The fibrous reinforcing material can be composed of any material that increases the strength of binder 13. Examples of useful reinforcing fibrous material in applications of the present invention include metallic or nonmetallic fibrous material. The preferred fibrous material is nonmetallic. The nonmetallic fibrous materials may be materials made of glass, carbon, minerals, synthetic or natural heat resistant organic materials, or ceramic materials. Preferred fibrous reinforcing materials for applications of the present invention are organic materials, glass, and ceramic fibrous material.

By "heat resistant" organic fibrous material, it is meant that useable organic materials should be sufficiently resistant to melting, or otherwise softening or breaking down, under the conditions of manufacture and use of the coated abrasives of the present invention. Useful natural organic fibrous materials include wool, silk, cotton, or cellulose. Examples of useful synthetic organic fibrous materials are made from polyvinyl alcohol, nylon, polyester, rayon, polyamide, acrylic, polyolefin, aramid, or phenol. One particularly preferred organic fibrous material for applications of the present invention is aramid fibrous material. Such a material is commercially available from the Dupont Co., Wilmington, DE under the trade names of "Kevlar" and "Nomex." It is also possible to have more than one type of reinforcing fiber in binder 13.

Generally, any ceramic fibrous reinforcing material is useful in applications of the present invention. An example of a ceramic fibrous reinforcing material suitable for the present invention is "Nextel" which is commercially available from Minnesota Mining and Manufacturing Co., St. Paul, MN.

Examples of useful, commercially available, glass fibrous reinforcing materials in yarn or roving form are those available from PPG Industries, Inc. Pittsburgh, PA, under the product name E-glass bobbin yarn; those available from Owens-Corning, Toledo, OH, under the product name "Fiberglas" continuous filament yarn; and Manville Corporation, Toledo, OH, under the product name "Star Rov 502" fiberglass roving. The size of glass fiber yarns and rovings are typically expressed in units of 0.9 144 m/0,4536 kg (yards/lb). Useful preferred grades of such yarns and rovings are in the range of 151,19 to 30238,1 m/kg (75 to 15,000 yards/lb).

If glass fibrous reinforcing material is used, it is preferred that the glass fibrous material be accompanied by an interfacial binding agent, i.e., a coupling agent, such as a silane coupling agent, to improve adhesion to the organic binder material, particularly if a thermoplastic binder material is used. Examples of useful silane coupling agents include those known under the trade designations "Z-6020" or Dow Corning "Z-6040," both available from Dow-Corning Corp., Midland, MI.

The reinforcing fibers may contain a pretreatment of some kind, prior to being engulfed by binder 13. This pretreatment may be an adhesion promoter or a slashing compound. For example, fiberglass reinforcing fibers may contain a surface treatment, such as an epoxy or urethane compatible with fiberglass yarn, to promote adhesion to the binder 13. Examples of such fiberglass yarns are those known by the trade designations "ECG 150 1/0 1.0Z" style 903 and "EC9 33 1X0 Z40" style 903 fiberglass yarns from PPG, Pittsburgh, PA, and those known under the trade designations "ECG 150 1/0" style 603 and "EC9 33 1X0 0.7Z" style 603 fiberglass yarns from Owens-Corning, Toledo, OH. Advantages can be obtained through use of fibrous reinforcing materials of a length as short as 100 micrometers, or as long as needed for a fibrous reinforcing layer formed from one continuous strand. It is preferred that the fibrous reinforcing material used be in the form of essentially one continuous strand per layer of reinforcing material. That is, it is preferred that the fibrous reinforcing material is of a length sufficient to extend around the length, i.e., circumference, of the coated abrasive loop a plurality of times and provide at least one distinct layer of fibrous reinforcing material.

The reinforcing fiber denier, i.e., degree of fineness, for preferred fibrous reinforcing material ranges from about 5 to about 5000 denier, typically between about 50 and about 2000 denier. More preferably, the fiber denier will be between about 200 and about 1200, and most preferably between about 500 and about 1000. It is understood that the denier is strongly influenced by the particular type of fibrous reinforcing material employed.

The fibrous reinforcing material can be in the form of fibrous strands, a fiber mat or web, or a stitchbonded or weft insertion mat. A primary purpose of a mat or web structure is to increase the tear resistance of the coated abrasives of the invention. The mat or web can be either in a woven or a nonwoven form. Preferably, the mat consists of nonwoven fibrous material at least because of its openness, nondirectional strength characteristics, and low cost.

A nonwoven mat is a matrix of a random distribution of fibers. This matrix is usually formed by bonding fibers together either autogenously or by an adhesive. That is, a nonwoven mat is generally described as a sheet or web structure made by bonding or entangling fibers or filaments by mechanical, thermal, or chemical means.

Examples of nonwoven forms suitable for this invention include staple bonded, spun bonded, melt blown, needle punched, hydroentangled or thermo-bonded forms. A nonwoven web is typically porous, having a porosity of about 15% or more. Depending upon the particular nonwoven employed, the fiber length can range from about 100 micrometers to infinity, i.e., continuous fibrous strands. Nonwoven mats or webs are further described in "The Nonwovens Handbook" edited by Bernard M. Lichstein, published by the Association of the Nonwoven Fabrics Industry, New York, 1988.

The thickness of the fibrous mat structure when applied in typical applications of the present invention generally ranges from about 25 to about 800 micrometers, preferably from about 100 to about 375 micrometers. The weight of a preferred fibrous mat structure generally ranges from about 7 to about 150 grams/square meter (g/m²), preferably from about 17 to about 70 g/m². In certain preferred applications of the present invention, the article contains only one layer of the fibrous mat structure. In other preferred embodiments it can contain multiple distinct layers of the fibrous mat structure distributed throughout the binder. Preferably, there are 1 to 10 layers, and more preferably 2 to 5 layers, of the fibrous mat structure in articles of the present invention. Preferably about 1-50 wt %, and more preferably about 5-20 wt %, of the preferred articles of the present invention is the fibrous reinforcing mat.

The type of fibrous reinforcement chosen typically depends on the organic polymeric binder material chosen and the use of the finished product. For example, if a thermoplastic binder material 13 is desired, reinforcement strands are important for imparting strength in the longitudinal direction. The binder material 13 itself generally has good cross-belt strength and flexibility, i.e., in the direction of the width of the belt. If a thermosetting binder material is desired, a fibrous mat structure is important for imparting strength and tear resistance.

Coated abrasives of the present invention preferably and advantageously include a combination of fibrous reinforcing strands and a fibrous mat structure. The fibrous strands can be individual strands embedded within the fibrous mat structure for advantage, at least with respect to manufacturing ease. The fibrous strands can also form distinct layer(s) separate from, i.e., noninterlocking or intertwining with, the fibrous mat structure.

The fibrous mat structure is advantageous at least because it generally increases the tear resistance of endless, seamless articles of the present invention. For endless, seamless articles that include both fibrous reinforcing strands and a fibrous mat structure, the fibrous mat structure is preferably about 1-50 wt %, more preferably about 5-20 wt %, of the member composition, and the fibrous reinforcing strands are preferably about 5-50 wt %, more preferably about 7-25 wt %, of the composition.

As stated above, the fibrous reinforcing material can also be in the form of a mat structure containing adhesive or melt-bondable fibers used to integrate parallel strands of individual fibers. In this way, "individual" parallel strands are embedded, i.e., incorporated, within a fibrous reinforcing mat. These parallel strands can be in direct contact with each other along their length, or they can be separated from each other by a distinct distance. Thus, the advantages of using individual fibrous reinforcing strands can be incorporated into a mat structure. Such melt-bondable fibers are disclosed, for example, in European Patent Application 340,982, published November 8, 1989.

The fibrous reinforcing material can be oriented as desired for advantageous applications of the present invention. That is, the fibrous reinforcing material can be randomly distributed, or the fibers and/or strands can be oriented to extend along a direction desired for imparting improved strength and tear characteristics.

As stated previously, in certain articles of the present invention, individual reinforcing strands can be adjacent to one another within a layer of fibrous reinforcing material without overlapping or crossing or the reinforcing strands may be interlacing. They can also be in the form of a plurality of noninterlacing parallel and coplanar reinforcing strands. Furthermore, there can be a plurality of layers, i.e., planes, of fibrous reinforcing material, which can be oriented parallel or perpendicular to one another.

The fibrous reinforcing material can be directed such that the majority of the strength in the cross direction can be attributed to the organic polymeric binder. To achieve this, either a high weight ratio of binder to fibrous reinforcing material is employed, such as about 10:1; or, the fibrous reinforcing material, usually in the form of individual reinforcing strands, is present in only the machine, i.e., longitudinal, direction of the loop.

Referring again to the figures, Figs. 2 to 5 illustrate (not shown to scale) various coated abrasives within the invention. It is preferred that the fibrous reinforcing material, particularly the individual reinforcing strands, be present in a coated abrasive construction in a predetermined, i.e., not random, position or array. For example, for the embodiment 30 of Fig. 2, the individual wraps 31 in the layer of reinforcing fibrous strands are oriented to extend in the machine direction, i.e., the longitudinal direction, of article 30; Fig. 2 being a representation of an endless, seamless coated abrasive material with a portion of an internal layer of reinforcing strands exposed.

As illustrated in Fig. 3, which is an enlarged fragmentary cross-sectional view of the endless, seamless coated abrasive 30 taken generally along line 4-4, Fig. 2, the fibrous reinforcing material is present in two distinct layers 32 and 33 with solidified organic binder layers 34, 35, and 36 above, between, and below the layers of fibrous reinforcing material 32 and 33. One layer (33) is oriented above and separate from the other layer (32) by a layer of organic binder material 35. Layer .33 is a layer of fibrous strands with the wraps 31 in extension in the longitudinal direction of the article. Layer 32 is a layer of a fibrous reinforcing mat or web. This orientation of the strands in the longitudinal direction of the article provides advantageous characteristics, particularly tensile strength, i.e., resistance to tearing in the longitudinal direction of the loop. Layers 34, 35, and 36 all correspond to binder 13 of Figs. 1 and 2. It will be appreciated that binder layers 34, 35, and 36 may be the same or different in composition. Abrasive particles 16 and size coating 17 are illustrated as in Fig. 1.

Although not shown in any particular figure, the reinforcing fibrous strands can alternatively be oriented to extend in the cross direction of a coated abrasive, or at least to approach the cross direction. Furthermore, for alternative embodiments not shown in any particular figure, alternate layers of reinforcing strands can be oriented to extend in both the longitudinal and cross direction, respectively, of the coated abrasive as a grid, if so desired. A significant improvement in cross tear resistance is realized when the fibers are extended in the cross direction, and segments may be spliced together to form segmented coated abrasives.

Fig. 4 is an enlarged fragmentary cross-sectional view of an endless, seamless coated abrasive according to the present invention taken generally analogously along line 4-4, Fig. 2. Article 50 has one layer of fibrous reinforcing mat structure 52 in its internal structure. The embodiment shown in Fig.4 shows a fibrous reinforcing mat structure with individual parallel fibrous strands 53 incorporated therein. Although not specifically shown in Fig. 4, the layer of fibrous reinforcing mat structure typically consists of at least two wraps of the reinforcing mat. Binder layers 55 and 56 correspond to binder 13 as described in reference to Fig. 1. Abrasive particles 16 and size coating 17 are illustrated as in Fig. 1.

If there is only one layer of a fibrous mat structure or one layer of fibrous reinforcing strands used, the layer is preferably oriented in the center portion of binder 13 thickness, although it can be positioned toward one of the outer surfaces of the article. That is, if there is only one layer of a fibrous reinforcing material, it is not on, or at, the surface of the article; rather it is engulfed within the internal structure of binder 13. Thus, at the outer and inner surfaces of an endless, seamless article there is generally no exposed fibrous reinforcing material.

Referring to the embodiment of Fig. 5, which is an enlarged fragmentary cross-sectional view of an endless, seamless coated abrasive according to the present invention taken generally analogously along line 4-4, Fig. 2, article 60 has three parallel layers, i.e., planes, 62; 63, and 64 of fibrous reinforcing material. These three layers 62, 63, and 64 are separated from one another by regions of organic polymeric binder material 65 and 66, which correspond to binder 13 in Fig. 1. These three layers 62, 63, and 64, generally do not overlap, interlock, or cross one another, and are coated by regions of organic binder material 67 and 68. Although each of the layers of fibrous reinforcing material could be a layer of reinforcing strands, a layer of a fibrous reinforcing mat or web, or a layer of a fibrous reinforcing mat with reinforcing strands incorporated therein, the embodiment in Fig. 5 shows layers 62 and 64 as layers of fibrous mat structure, and layer 63 as a layer of fibrous strands positioned in the machine, i.e., longitudinal, direction of article 60. Also note that in making an article such as depicted in Fig. 5, binder layers 65 and 66 may be applied simultaneously or in two separate steps, and layers 65 and 66 may comprise the same or different organic polymers.

In Figs. 3, 4, and 5, an optional layer 37, 57, and 69, respectively is illustrated. This refers to the optional paper or polymeric film referred to earlier that may be used to increase tear resistance, reduce backwear, and/or increase the aesthetic appearance of the article. The paper or plastic film may simply be employed to ensure release of the product from a support structure during manufacture. Preferred polymeric films include those comprising polyester, polyimide, polyethylene, polyamide, polysulfone and polypropylene.

Coated abrasives of the present invention include at least one layer of reinforcing strands, or at least one layer of a fibrous reinforcing mat or web structure, or at least one layer of a fibrous reinforcing mat with reinforcing strands incorporated therein. Preferred articles of the present invention incorporate a plurality of layers of fibrous reinforcing material. More preferred articles of the present invention incorporate at least one layer of a fibrous mat structure and at least one layer of reinforcing strands, for advantageous strength in both the longitudinal and cross directions.

### Optional Additives

The coated abrasives of the present invention can further and advantageously for certain applications of the present invention include other additives. For example, incorporation of a toughening agent into binder 13 will be preferred for certain applications. Preferred toughening agents include rubber-type polymers or plasticizers. The preferred rubber toughening agents are synthetic elastomers. Preferably, at least an effective amount of a toughening agent is used. Herein, the term "effective amount" in this context refers to an amount sufficient to impart improvement in flexibility and toughness.

Other materials that can be advantageously added to binder 13 for certain applications of the present invention include inorganic or organic fillers. Inorganic fillers are also known as mineral fillers. A filler is defined as a particulate material, typically having a particle size less than about 100 micrometers, preferably less than about 50 micrometers. The filler may also be in the form of solid or hollow spheroids, such as hollow glass and phenolic spheroids. Fillers are capable of being dispersed uniformly within the binder 13. Examples of useful fillers for applications of the present invention include carbon black, calcium carbonate, silica, calcium metasilicate, cryolite, phenolic fillers, or polyvinyl alcohol fillers. If a filler is used, it is theorized that the filler fills in between the reinforcing fibers, and possibly prevents crack propagation through the binder 13. Typically, a filler would not be used in an amount greater than about 70 weight % based on the weight of binder 13, and 70 weight % based on the weight of a size coating.

Other useful materials or components that can be added to binder 13 for certain applications of the present invention are pigments, oils, antistatic agents, flame retardants, heat stabilizers, ultraviolet stabilizers, internal lubricants, antioxidants, and processing aids. Examples of antistatic agents include graphite fibers, carbon black, metal oxides such as vanadium oxide, conductive polymers, humectants and combinations thereof. These materials are further described, for example, in U.S. Patent Nos. 5,108,463, 5,137,542, and 5,203,884.

### Adhesive Layers

The adhesive layer (so-called "size" coating 17 of Fig. 1) in the coated abrasive articles of the present invention is formed from a resinous adhesive. Useful resinous adhesives are those that are compatible with the organic polymeric binder material 13. Cured resinous adhesives are also tolerant of grinding conditions such that the adhesive layer(s) does not deteriorate and prematurely release the abrasive material.

Size adhesives are preferably comprised of thermosetting resin. Examples of useable thermosetting resinous adhesives suitable for these layers include those mentioned above as useful in forming binder 13.

The size adhesive layer (17 in Fig. 1) can preferably contain other materials that are commonly utilized in abrasive articles. These materials, referred to as additives, include grinding aids, coupling agents, wetting agents, dyes, pigments, plasticizers, release agents, or combinations thereof. Other fillers might also be used as additives in these layers. Fillers or grinding aids are typically present in no more than an amount of about 70 weight %, for the size coating, based upon the weight of the adhesive. Examples of useful fillers include calcium salts, such as calcium carbonate and calcium metasilicate, silica, metals, carbon, or glass.

The optional supersize layer can preferably include a grinding aid to enhance the abrading characteristics of the coated abrasive. Examples of grinding aids include potassium tetrafluoroborate, cryolite, ammonium cryolite, or sulfur. One would not typically use more of a grinding aid than needed for desired results.

Preferably, the adhesive layers are formed from a conventional calcium salt filled resin, such as a resole phenolic resin, for example. Resole phenolic resins are preferred at least because of their heat tolerance, relatively low moisture sensitivity, high hardness, and low cost: More preferably, the adhesive layers include about 45-55 wt-% calcium carbonate or calcium metasilicate in a resole phenolic resin. Most preferably, the adhesive layers include about 50 wt-% calcium carbonate filler, and about 50 wt-% resole phenolic resin, aminoplast resin, or a combination thereof. Herein, these percentages are based on the weight of the adhesive.

### Abrasive Material

Examples of abrasive material 16 suitable for use in articles of the present invention include fused aluminum oxide, heat treated aluminum oxide, ceramic aluminum oxide, silicon carbide, alumina zirconia, garnet, diamond, cubic boron nitride, or mixtures thereof. The term "abrasive material" encompasses abrasive grains, agglomerates, or multi-grain abrasive granules. An example of such agglomerates is described in U.S. Patent No. 4,652,275. It is also with the scope of the invention to use diluent erodable agglomerate grains as disclosed in U.S. Pat. No. 5,078,753.

A preferred abrasive material is an alumina-based, i.e., aluminum oxide-based, abrasive grain. Useful aluminum oxide grains for applications of the present invention include fused aluminum oxides, heat treated aluminum oxides, and ceramic aluminum oxides. Examples of ceramic aluminum oxides are disclosed in U.S. Patent Nos. 4,314,827, 4,744,802, 4,770,671, and 4,881,951.

The average particle size of the abrasive grain for advantageous applications of the present invention is at least about 0.1 micrometer, preferably at least about 100 micrometers. A grain size of about 100 micrometers corresponds approximately to a coated abrasive grade 120 abrasive grain, according to American National Standards Institute (ANSI) Standard B74.18-1984. The abrasive grain can be oriented, or it can be applied to binder 13 without orientation, depending upon the desired end use of the coated abrasive.

### Preparation of the Coated Abrasive Articles

Different of methods can be used to prepare abrasive articles according to the present invention. Typically the method chosen depends on the type of binder 13 chosen.

A method of making a coated abrasive, the method comprising:
(a) providing a fibrous reinforcing material;
(b) applying an organic polymeric binder precursor to the fibrous reinforcing material in an amount sufficient to thereby engulf the reinforcing material with binder precursor and further provide a region of binder precursor substantially free of the reinforcing material;
(c) applying a plurality of abrasive particles to the region of binder precursor substantially free of the reinforcing material such that the abrasive particles protrude from the binder precursor; and
(d) exposing the construction of step (c) to conditions sufficient to solidify the binder precursor thereby forming a binder, wherein a majority of the abrasive particles protrude out of the binder.

A continuous web process useful for producing seamed coated abrasives, the process comprising:
(a) traversing a nonwoven web material through a coating station to engulf the nonwoven in an organic polymeric binder precursor, thus forming a saturated nonwoven having a region of binder precursor substantially free of said nonwoven material;
(b) embedding a fibrous reinforcing yarn into the saturated nonwoven to form a region substantially free of said nonwoven material and said yarn;
(c) projecting via electrostatic forces a plurality of abrasive particles into the region of binder precursor substantially free of said nonwoven material and said yarn;
(d) exposing the construction resulting from step (c) to conditions sufficient to solidify the binder precursor to form a binder;
(e) applying a size coating precursor over the abrasive particles and the binder;
(f) exposing the construction resulting from step (e) to conditions sufficient to solidify the size coating precursor thus forming a size coated abrasive;
(g) optionally further processing the size coated abrasive by procedures such as additional curing. flexing and/or humidification; and
(h) converting the size coated abrasive into the desired form or shape.

One preferred continuous method to make the abrasive article of the invention, is to first saturate a nonwoven substrate with a binder precursor. This saturation can be accomplished by any conventional coating method such as spraying, roll coating, knife coating, dipping, and squeeze coating, the preferred technique being to knife coat the nonwoven substrate with the binder precursor. Next, this saturated nonwoven is applied to a support structure. Then alternating yarns of nylon and fiberglass are applied over the nonwoven substrate. As the yarns are applied, the tension should be set such that the yarns are pulled down into the saturated nonwoven. This tension will also help promote wetting of the binder precursor onto the reinforcing yarns. There is sufficient binder precursor to wet and engulf the reinforcing yarns and still have an excess of binder precursor present over the reinforcing yarns. The nonwoven and reinforcing yarns are preferably applied to the support structure to create a uniform structure. In some instances to make a uniform structure, the nonwoven and/or reinforcing fibers are applied in two layers, these two layers being 180 degrees out of phase.

As shown generally in Fig. 1, the reinforcing fibers lie substantially in a first plane. If there is more than one type of reinforcing fiber or two or more layers of reinforcing fibers, essentially all of the reinforcing materials will be relatively close together. Thus, this first plane is meant to include the all of the reinforcing fibers.

Fig. 13 illustrates a schematic, reduced view of a continuous web process useful for producing seamed coated abrasives within the invention. A roll of reinforcing fiber 31, e.g., a roll of nonwoven 31 is unwound and is subsequently coated at a coating station 32 with a binder precursor 33. This coating can be accomplished by any technique previously mentioned. Preferred is the use of a knife coater. Optionally, other reinforcing fibers, e.g., reinforcing yarns 35 can leave an unwind station 34 and be embedded into the binder precursor. The binder precursor will then wet or essentially engulf these reinforcing yams. Next, abrasive particles 37 are coated into the binder precursor, preferably by an electrostatic coater 36. A ground plate 38 is placed above the web. Then the resulting construction is exposed to conditions to solidify the binder precursor. It is preferred that the binder precursor be exposed to an energy source 39, either thermal energy or radiation energy. Next, a size coating precursor 42 is coated over the abrasive particles by any conventional technique. In Figure 13, the size coating precursor is applied by a roll coater 40. The resulting construction is then subjected to conditions sufficient to solidify the size coating precursor. Typically, the size coating precursor is exposed to an energy source 43. The resulting coated abrasive 44 is then wound into a roll. Further processing may then occur such as additional curing, flexing and/or humidification. After this optional further processing, the coated abrasive in web form can be converted into the desired form or shape.

It is also within the scope of this invention to use a carrier web or support web during the process illustrated in Fig. 13. The carrier web will help support the "abrasive" web until the binder precursor can be solidified. The support web can be any material that has the necessary strength and heat resistance. Examples of such carrier webs include paper, polymeric film, rubber webs, cloth, vulcanized fiber, metallic belts, and treated versions thereof and combinations thereof. The carrier web may be perforated. The front surface of the carrier web may also contain a release coating, so that the carrier web does not adhere to the binder after solidification of the make coat.

The preferred size coating is a resole phenolic resin filled with either a grinding aid or an inorganic filler. For endless, splice-less belts, it is preferred to spray the size coating precursor over the abrasive particles. Preferably two or more spraying passes are employed to apply the size coating precursor. After the size coating precursor is applied, it is solidified, typically upon exposure to an energy source. Typcial and preferable energy sources include thermal and radiation energy

Abrasive particle coating techniques for use in the inventive methods may be selected from the group consisting of electrostatic coating, drop coating, and magnetic coating. In the third and fourth embodiments, a size coating precursor may be applied over an uncured or only partially solidified binder precursor, i.e., the binder precursor has not been exposed to conditions to initiate polymerization or curing.

The support structure used in the first and third methods is preferably a drum, which can be made from a rigid material such as steel, metal, ceramics, or a strong plastic material. The drum is placed on a mandrel so that it can be rotated at a controlled rate by a motor. This rotation can range anywhere from 0.1 to 500 revolutions per minute (rpm), preferably 1 to 100 rpm, depending on the application.

The drum can be a unitary or created of segments or pieces that collapse for easy removal of the endless, seamless article. If a large endless, seamless article is preferred, the drum is typically made of segments for collapsibility and easy removal of the article. If such a drum is used, the inner surface of the article may contain slight ridges where the segments are joined and form a seam in the drum. Although it is preferred that the inner surface be generally free of such ridges, such ridges can be tolerated in endless, seamless coated abrasives of the present invention in order to simplify manufacture, especially with large belts.

The dimensions of the drum generally correspond to the dimensions of the endless, seamless articles. The circumference of the drum will generally correspond to the inside circumference of the endless, seamless articles. The width of the endless, seamless articles can be of any value less than or equal to the width of the drum. A single endless, seamless coated abrasive can be made on the drum, removed from the drum, and the sides can be trimmed. Additionally, the coated abrasive can be slit longitudinally into multiple articles with each having a width substantially less than the original article.

In many instances, it is preferred that a release coating be applied to the periphery of the drum before the binder or any of the other components are applied. This provides for easy release of the endless, seamless coated abrasive after the binder is solidified. In most instances, this release coating will not become part of the endless, seamless coated abrasive. If a collapsible drum is used in the preparation of a large endless, seamless coated abrasive, such a release liner helps to prevent, or at least reduce, the formation of ridges in the inner surface of the article, as discussed above. Examples of such release coatings include, but are not limited to, silicones, fluorochemicals, or polymeric films coated with silicones or fluorochemicals. It is also within the scope of this invention to use a second release coating which is placed over the final or top coating of the binder. This second release coating is typically present during the solidification of the binder, and can be removed afterwards.

The thermosetting binder material is typically applied in a liquid state or semi-liquid state to the drum. The application of the binder can be by any effective technique such as spraying, die coating, knife coating, roll coating, curtain coating, or transfer coating. For these coating techniques, the drum is typically rotated as the thermosetting binder is applied. For example, referring to Fig. 6, a thermosetting binder 72 can be applied by a curtain coater 74 set above the drum 76. As the drum 76 rotates, the thermosetting binder 72 is applied to the periphery 77 of the drum 76. It typically takes more than one rotation of the drum to obtain the proper coating of the thermosetting binder, such that the fibrous reinforcing material is fully coated and will be fully surrounded by organic binder material in the final product. The thermosetting binder 72 may also be heated to lower the viscosity and to make it easier to use in the coating process.

It is also within the scope of this invention to use more than one type of binder material 13. When this is done, the two or more types of binder materials, e.g., thermosetting binder materials, can be mixed together prior to the coating step, and then applied to the drum. Alteratively, a first binder material, e.g., a thermosetting resin, can be applied to the drum, followed by a second binder material, e.g., a thermoplastic material. If a thermosetting resin is used in combination with a thermoplastic material, the thermosetting resin may be gelled, or partially cured, prior to application of the thermoplastic material.

For thermosetting resins, the solidification process is actually a curing or polymerization process. The thermosetting resin is typically cured with either time or a combination of time and energy. This energy can be in the form of thermal energy, such as heat or infrared, or it can be in the form of radiation energy, such as an electron beam, ultraviolet light, or visible light. For thermal energy, the oven temperature can be within a range of about 30-250°C, preferably within a range of about 75-150°C. The time required for curing can range from less than a minute to over 20 hours, depending upon the particular binder chemistry employed. The amount of energy required to cure the thermosetting binder will depend upon various factors such as the binder chemistry, the binder thickness, and the presence of other material in the binder.

The thermosetting binder material is preferably only dried and in some instances partially solidified or cured before the abrasive particles are applied.

The fibrous reinforcing material can be applied to the drum in several manners. Primarily, the particular method is dictated by the choice of fibrous material. A preferred method for applying a continuous individual reinforcing fibrous strand involves the use of a level winder. In this method, the drum is rotated while the reinforcing fibrous strand is initially attached to the drum, is pulled through the level winder, and is wound around the drum helically across the width of the drum, such that a helix is formed in longitudinal extension around the length of the drum. It is preferred that the level winder move across the entire width of the drum such that the continuous reinforcing fibrous strand is uniformly applied in a layer across the drum. In this embodiment, the strand is in a helically wound pattern of a plurality of wraps in a layer within the organic polymeric binder material, with each wrap of the strand parallel to the previous wrap of the strand.

If the level winder does not move across the entire width of the drum, the reinforcing fibrous strands can be placed in a specific portion of the article along the width of the seamless, endless article. In this way, regions in which reinforcing fibrous strands are present in one plane can be separated from each other without overlap. For advantageous strength, however, the fibrous reinforcing strands are in a continuous layer across the width of the belt.

The level winder can also contain an orifice such that as the fibrous strand proceeds through the orifice it is coated with a binder material. The diameter of the orifice is selected to correspond to the desired amount of binder.

Additionally, it may be preferable to wind two or more different yarns side by side on the level winder. It is also preferable to wind two or more different yarns at a time into the article. For example, one yarn may be made of fiberglass and another may be polyester.

A chopping gun can also be used to apply the fibrous reinforcing material. A chopping gun projects the fibers onto the resin material on the drum, preferably while the drum is rotating and the gun is held stationary. This method is particularly suited when the reinforcing fibers are small, i.e., with a length of less than about 100 millimeters. If the length of the reinforcing fiber is less than about 5 millimeters, the reinforcing fiber can be mixed into and suspended in the binder. The resulting binder/fibrous material mixture can then be applied to the drum in a similar manner as discussed above for the binder.

In method embodiments one and three of the present invention the binder may be applied to a rotating drum simultaneously with a fibrous reinforcing material. The binder will then typically wet the surfaces of the reinforcing material. In preferred applications of the present invention, the fibrous reinforcing material is coated with the binder and then the binder/fibrous material is applied to the drum.

If the fibrous material is in the form of a mat or web, such as a nonwoven or woven mat, the mat is applied by directing it from an unwind station and wrapping it helically around the drum as the drum rotates. Depending upon the particular construction desired, there can be more than one wrap of the fibrous mat structure around the drum. Preferably, there are at least two wraps of the fibrous mat in each "layer" of the fibrous mat structure. In this way a discreet seam in the layer is avoided.

The fibrous mat structure can be combined with the organic polymeric binder material in several manners. For example, the mat can be applied directly to the binder material that has been previously applied to the drum, the mat can be applied to the drum first followed by the binder material, or the mat and the binder material can be applied to the drum in one operation.

In preferred methods of the present invention, the fibrous mat structure is coated (preferably saturated) with the organic polymeric binder precursor material prior to application to the drum. This method is preferred at least because the amount of binder material can be more easily monitored. This coating or saturation can be done by any conventional technique such as roll coating, knife coating, curtain coating, spray coating, die or dip coating.

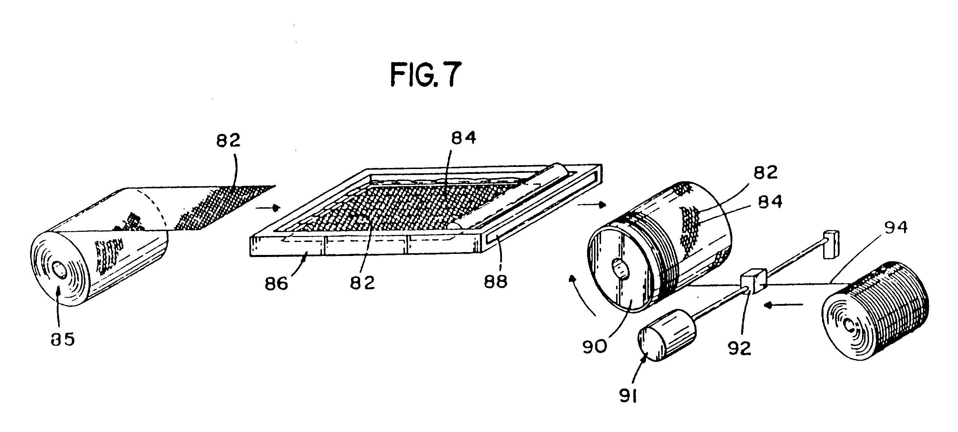

Referring to Fig. 7, in a preferred method for preparing a fiber reinforced intermediate article (having binder which is only partially cured), the fibrous mat structure 82 is saturated with the organic polymeric binder material 84 as it is removed from an unwind station 85. The amount of binder material 84 applied is determined by a knife coater 86, in which a gap 88 in the knife coater controls the amount of polymeric binder material 84 applied.

The mat/liquid binder composition (82/84) is then applied to a drum 90 in at least one layer, i.e., such that the mat/liquid binder composition (82/84) is wrapped completely around the drum at least once. Although the structure is seamless, there is a seam in the internal structure of an endless, seamless loop made in this manner. To avoid such a seam, it is preferable to wrap the mat/liquid binder composition (82/84) around the drum 90 at least twice. The binder precursor wets the surface of the fibrous mat structure prior to solidification such that upon curing a unitary, endless, seamless, construction is achieved.

If a layer of a continuous individual reinforcing fibrous strand is used as well, the process described above can be used in its application. Referring to Fig. 7, the method involves the use of a yarn guide system 91 with a level winder 92. In this method, the drum 90 is rotated while the reinforcing fibrous strand 94 is initially attached to the drum 90, is pulled through the level winder 92, and is wound around the drum 90 helically across the width of the drum, such that the layer of the strand 94 is no wider than the layer of the mat 82. It is preferred that the level winder 92 move across the width of the drum such that the continuous reinforcing fibrous strand 94 is uniformly applied in a layer across the width of the mat 82. Thus, the strand 94 is in a helically wound pattern of a plurality of wraps in a layer within the organic polymeric binder material, with each wrap of the strand parallel to the previous wrap of the strand. Furthermore, the individual wraps of the strand 94 are at a constant nonzero angle relative to the parallel side edges of the mat 82. Sufficient uncured thermosetting binder precursor 84 is applied to the mat 82 to provide a layer of resin at least above and below the reinforcing material, i.e., on the outer and inner surfaces of the loop. Furthermore, there is a layer of resin between the mat 82 and layer of fibrous strand 94, if sufficient resin is used.

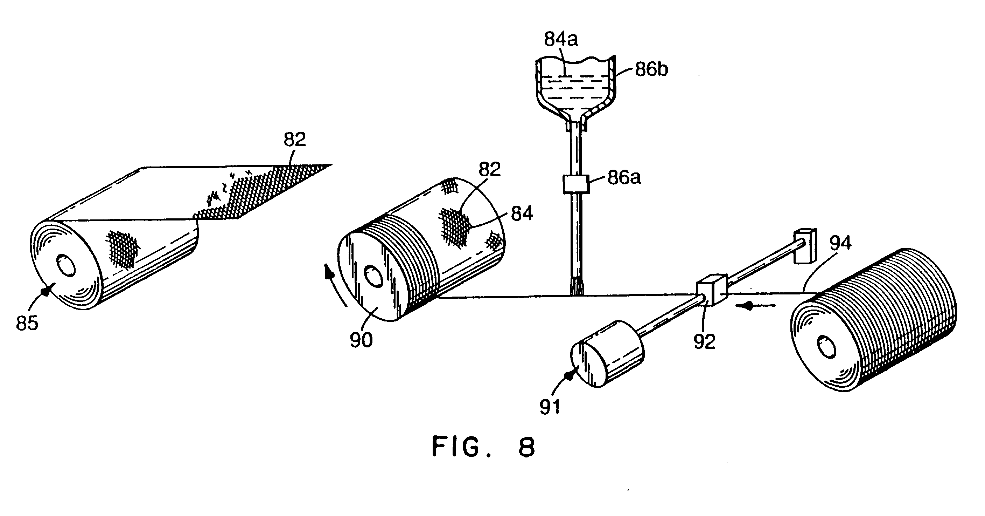

Fig. 8 illustrates an alternative to the arrangement in Fig 7, wherein the knife coater 86 in Fig. 7 may be removed and instead a metering pump 86a is employed to coat the strand 94. Typically and preferably a plurality of strands 94 (usually about 6 strands) are passed through a comb (not illustrated) and coated by a single flow from metering pump 86a, which draws thermosetting binder precursor 84a from container 86b. Typically flow rates of binder precursor to coat 6 strands range from about 20 to about 40 grams per minute.

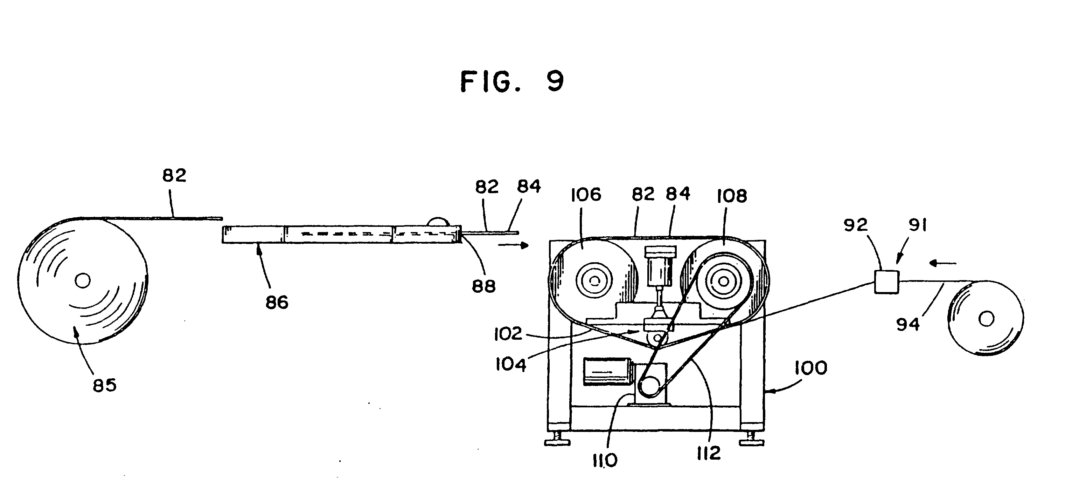

Fig. 9 illustrates an alternative embodiment of a process for forming an intermediate endless, seamless fiber reinforced article. This process is similar to that shown in Fig. 7, but uses an alternative support structure. In this embodiment the process uses a conveyor unit 100. This particular procedure illustrates the general method of making an intermediate endless, seamless article utilizing a thermosetting binder material, although a thermoplastic material could also be used. The intermediate article is formed on a sleeve 102, i.e., in the form of a belt. The sleeve 102 is preferably a stainless steel sleeve. The stainless steel sleeve 102 can be coated with a silicone release liner, i.e., material, on the outer surface of the sleeve for easy removal of the endless, seamless loop formed. The sleeve 102 can be of any size desired. A typical example is in the form of a belt 0.4 mm thick, 10 cm wide, and 61 cm in circumference. This sleeve 102 is typically mounted on a two idler, cantilevered, drive system 104 that rotates the sleeve 102 at any desired rate. The drive system 104 consists of two drive idlers 106 and 108, a motor 110 and a belt drive means 112.

The procedures described herein with respect to forming an intermediate endless, seamless article on a drum apply also to the forming of an intermediate article on this conveyor unit 100. For example, analogously to the method discussed in Fig. 7, a nonwoven web 82 is saturated with a liquid organic binder material 84 by means of a knife coater 86. The resulting saturated material, i.e., mat/liquid binder composition (82/84) is then preferably wrapped twice around the outer surface, i.e., periphery, of the sleeve 102 as it rotates on the drive system 104, at a rate, for example, of 2 revolutions per minute (rpm). A single reinforcing fibrous strand 94 can then be wrapped over the saturated nonwoven web, i.e., mat/liquid binder composition (82/84) by means of a yarn guide system 91 with a level winder 92 that moves across the face of the drive idler 108 as the sleeve 102 rotates on the drive system 104. The sleeve 102 typically rotates at a speed of 50 rpm. This results in an intermediate with a distinct layer of fibrous reinforcing strands with a spacing of about 10 strands per cm of width. This strand spacing can be changed by increasing or decreasing the rate of rotation of the sleeve or by increasing or decreasing the speed of the yarn guide.

After the intermediate article is formed by either of the methods illustrated in Figs. 7 and 9, the intermediate article and drum are place in an environment conducive to dry and/or partially cure the binder precursor. If a thermosetting binder precursor is employed, this generally entails placing the intermediate in a batch oven on rotating spindles, rotating the spindles at, for example 10 rpm, for a time and with the oven set at a temperature required for the particular binder precursor to partially cure. Afterwards, the drum and intermediate are removed from the oven and mounted on a rotating shaft above a hot plate covered with abrasive particles for electrostatically projecting the particles onto the intermediate, as illustrated in Fig. 14, where 130 represents the drum having intermediate article 131 thereon, drum 130 rotating above hot plate 132. An electric field E having lines of force 134 projects abrasive particles 135 onto the intermediate article, the drum acting as the ground plate. After application of abrasive particles, the drum and intermediate are placed in the oven again to more fully cure the binder precursor; alternatively, a size coating precursor is applied and then the intermediate and drum are placed in the oven to fully cure the binder precursor.

It is also within the scope of this invention to make non-uniform coated abrasives. In non-uniform articles there will be at least two distinct regions where the composition and/or amount of materials are not uniform. This non-uniformity can either be throughout the length of the article, the width of the article, or both the length and width of the article. The composition non-uniformity can be attributed to either the binder material 13, the fibrous reinforcing material or any optional additives. The non-uniformity can also be associated with different materials in different regions of the article or the lack of a material in certain regions of the article.

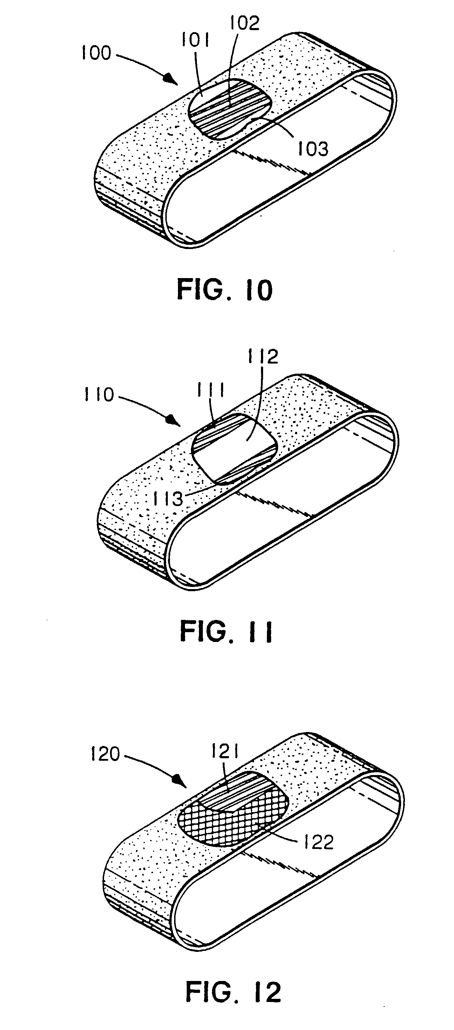

Figs. 10 through 12 illustrate three embodiments of non-uniform coated abrasives. Referring to Fig. 10, the coated abrasive 100 has three regions 101, 102, 103. The center 102 has a reinforcing yarn, whereas the adjacent regions 101 and 102 do not have reinforcing yarns. Regions 101 and 102 are made solely of binder material 13 of Fig. 1. The resulting coated abrasive will tend to have more flexible edges. Referring to Fig. 11, the coated abrasive 110 has three regions, 111, 112 and 113. Center 112 of the article is made essentially of only the binder 13 (Fig. 1), the regions adjacent to center region 111 and region 113 comprise binder and reinforcing material. Referring to Fig. 12, coated abrasive 120 has two regions 121 and 122. In region 122, the article comprises binder, reinforcing strands and a reinforcing mat. In region 121, the article comprises only binder and reinforcing fibers. There are many combinations of binder, reinforcing strands, reinforcing mats, additives and the amounts of such materials. The particular selection of these materials and their configuration is dependent upon the desired application for the coated abrasive. For instance, the coated abrasive described above and illustrated in Fig. 10 may have applications for an abrading operation where it is desired to have flexible edges on the coated abrasive. The coated abrasive described above and illustrated in Fig. 11 may have applications for abrading operations in which it is desired to have strong edges to prevent the edges from tearing.

There are many different methods to make a non-uniform coated abrasive. In one method, the level winder only winds the fibrous strands in certain regions of the drum. In another method, a chopping gun places the reinforcing material in certain regions. In a third method, the reinforcing yarns are unwound from a station and wound upon the drum in only certain regions. In still another approach, the binder material is only placed or coated on certain regions of the drum. It is also within the scope of the invention to use a combination of all of the different approaches.

There are several ways in which the optional additives can be applied. The method of application depends upon the particular components. Preferably, any additives are dispersed in the binder prior to the binder being applied to the drum. In some situations, however, the addition of additive to the binder results in either a thixotropic solution or a solution that has too high a viscosity to process. In such a situation, the additive is preferably applied separately from the binder material. For example, the binder material can be applied to the drum first, and while it is in a "tacky" state, additives can be applied. Preferably, the drum with the binder material rotates while the additive is either drop coated onto the drum or projected onto the drum. With either method, the additive can be uniformly applied across the width of the drum or concentrated in a specific area. Alternatively, the additive(s) can be applied to the fibrous reinforcing material, and the fiber/additive(s) combination can be applied to the drum.

If the viscosity of the binder precursor is too low, then during further processing of the abrasive article, the binder precursor will tend to flow or "run". This flow is undesirable and may cause the placement and orientation of the abrasive particles, or even the reinforcing fibers, to shift. If the viscosity of the binder precursor is too high, then the binder precursor may not adequately wet the reinforcing fibers. A preferred viscosity range is between out 500 to 20,000 mPas (centipoise), more preferably between about 1,000 and 5,000 mPas (centipoise) and most preferably between about 1,500 to 3,000 mPas (centipoise), measured at room temperature using a Brookfield model DV-1T viscometer, spindle number 3, at 30 rpm and room temperature (20-25°C). The viscosity may be adjusted by the amount of solvent (the % solids of the resin) and/or the chemistry of the starting resin. Heat may also be used to lower the resin viscosity, and may additionally be applied during the processes of the invention to effect better wetting of the binder precursor onto the reinforcing fibers. However, the amount of heat should be controlled such that there is not premature solidification of the binder precursor.

To make the endless, seamless coated abrasives of the present invention, there should be enough binder material 13 present to completely wet the surface of the fibrous reinforcing material and additives, and provide an anchoring mechanism for the abrasive particles. Additionally, there should be enough binder material present such that the binder material seals the non-abrasive surface and provides a relatively "smooth" and uniform non-abrasive surface, as discussed previously.

In preparation of a coated abrasive belt of the present invention, the intermediate article having abrasive particles thereon but no size coating can be installed around two drum rollers, which are connected to a motor for rotating the article. Alternatively, the intermediate can be installed around one drum roller, which is connected to a motor for rotating the article. Preferably, this drum roller can be the same as the drum used in the preparation of the previous intermediates. As the intermediate and drum rotate, the size adhesive precursor coating may be applied by any conventional coating technique such roll coating, spray coating, or curtain coating. Spray coating is preferred for certain applications. The adhesive layer(s) can then be fully solidified while the article is still on the drum rollers. Alternatively, the resulting product can be removed from the drum rollers prior to solidification of the adhesive layer(s).

If the binder 13 is a thermoplastic material, several different methods that can be used to apply a thermoplastic binder to a hub, i.e., drum roller. For example, a solvent can be added to the thermoplastic binder such that the thermoplastic can flow. In this method the thermoplastic binder can be applied to the hub by any technique such as spraying, knife coating, roll coating, die coating, curtain coating, or transfer coating. The thermoplastic binder is then solidified by a drying process to remove the solvent. The drying conditions will depend upon the particular solvent employed and the particular thermoplastic binder material employed. Typical drying conditions include temperatures within a range of about 15-200°C, preferably 30-100°C.

Alternatively, the thermoplastic binder can be heated above its softening point, and preferably above its melting point, such that it can flow. In this method, the thermoplastic binder material can be applied to the hub by any technique such as spraying, knife coating, roll coating, die coating, curtain coating, or transfer coating. The thermoplastic material is then solidified by cooling.

In a third method, the thermoplastic binder material can be applied in a solid or semi-solid form. This method is preferred for certain applications of the present invention. Typically, a segment of a thermoplastic material is cut and applied to the drum. The fibrous reinforcing material and any additives or other components are then applied to the hub. A second segment of a thermoplastic material is then applied over the fibrous reinforcing material. The hub/thermoplastic material are then heated to above the softening point, and preferably to above the melting point, of the thermoplastic binder material such that the thermoplastic binder flows and fuses all the binder, fibrous reinforcement, and optional ingredients. The thermoplastic binder material is then cooled and resolidified.

Elastomeric binders can be solidified either via a curing agent and a curing or polymerization process, a vulcanization process or the elastomeric binder can be coated out of solvent and then dried. During processing, the temperatures should not exceed the melting or degradation temperatures of the fibrous reinforcing material.

In certain coated abrasive embodiments of the invention, a material such as cloth, polymeric film, vulcanized fiber, nonwoven, fibrous reinforcing mat, paper, etc., treated versions thereof, or combinations thereof can be laminated onto the coated abrasive.
In certain abrading applications the back side of the coated abrasive should have a low coefficient of friction during use, such as abrading applications that are used with a platen. In these applications, a cellulosic nonwoven such as paper can form the back side (non abrasive surface) of the coated abrasive. During the batch manufacturing processes described above, a paper substrate is helically wound upon the support drum. Next, the binder precursor and the reinforcing fibers (nonwoven and/or reinforcing yarns) are applied over the paper. The binder precursor will flow and fill in between the gaps of the helically wound nonwoven. The remainder of the steps to form the coated abrasive are essentially the same as previously described. The paper may or may not be treated. In many cases, the paper will contain some type of treatment to either saturate or seal the paper.

### Examples

The present invention will be further described by reference to the following detailed examples, in which all parts and percentages are by weight unless otherwise noted. The following designations are used throughout the examples.
- PET1NW: a spunbonded polyester nonwoven mat approxi-mately 0.127 mm thick and weighed approximately 28 g/m². It was purchased from the Remay Corporation, Old Hickory, TN, under the trade designation "Remay", style 2275.
- PET: polyethylene terephthalate film having a thickness of 5 mils (0.127 mm).
- CAT: complex of methylene dianiline and sodium chloride dispersed in dioctyl phthalate. This material was purchased from Uniroyal Chemical Co., Inc., Middlebury, CT, under the trade designation "Caytur 31";
- LR1: a carboxyl terminated butadiene acrylonitrile copolymer commercially available from BFGoodrich, Cleveland, OH, under the trade designation "Hycar 1300X31", having a molar acrylonitrile content of 10 percent, a carboxyl content acid number of 28 (equivalents per hundred rubber), a functionality of 1.9, a number average molecular weight of 3,800, and a glass transition temperature measured by differential scanning calorimetry of -66°C;
- UR1: a ketoxime-blocked poly-1,4-butylene glycol diisocyanate having a molecular weight of about 1500 commercially available from Uniroyal Chemical Corp. under the trade designation "BL-16";
- ER1: a diglycidyl ether of bisphenol A epoxy resin commercially available from Shell Chemical Co., Houston, TX, under the trade designation "Epon 828";
- ACA: an anhydride curing agent commercially available from Anhydrides and Chemicals Inc., Newark, NJ, under the trade designation "AC-39";
- CA1: 2,4,6-tri(dimethylaminomethyl)phenol, an epoxy curing accelerator commercially available from Air Products and Chemicals, Allentown, PA, under the trade designation "DMP-30";
- VIB: polyether based toluene diisocyanate terminated prepolymer polyurethane elastomer commercially available from Uniroyal Chemical Co., Inc., Middlebury, CT, under the trade designation "Vibrathane B-813";
- CMD: a diglycidyl ether of bisphenol A epoxy resin coatable from water and was approximately 55% solids. This epoxy resin was purchased from Hi-Tek Polymers, Jeffersontown, KY, under the designation of "CMD 35201";
- ERC: 25% solids aqueous solution of 2-ethyl-4-methyl imidiazole, commercially available from Air Products, Allentown, PA, under the trade designation "EMI-24";
- SOL: an organic solvent which is a blend of light aromatic hydrocarbons known under the trade designations "Aromatic 100" and "Shell CYCLO SOL 53 Solvent", commercially available from Worum Chemical Co., St. Paul, MN,;
- GEN: a very low viscosity 100% solids amidoamine resin, known under the trade designation "Genamid 747", from Henkel Corporation, LaGrange, IL, characterized by a theoretical amino hydrogen equivalent weight of 95, an amine value of 462 milligrams KOH/gram resin, and a density of 7.8 pounds per gallon (0.12 grams/cm³);
- PS: a 15/85 blend of water and propylene glycol monomethyl ether commercially available from Worum Chemical Co., St. Paul, MN, under the trade designation "Polysolve".

### General Procedure for Preparing an Endless, Seamless Coated Abrasive

This procedure illustrates the general method of making an abrasive article in which the binder precursor serves to engulf the reinforcing fibers and secure the abrasive particles to the article.

The article was formed over an aluminum hub which had a diameter of 19.4 cm and a circumference of 61 cm. The aluminum hub had a wall thickness of 0.64 cm and a width of 61 cm. It was installed on a 7.6 cm mandrel that rotated by a DC motor and was capable of rotating from 1 to 120 revolutions per minute (rpm). Over the periphery of the hub was a 0.05 millimeter thick silicone coated polyester film, which acted as a release surface. This silicone coated polyester film was not a part of the final article. The final dimension of the abrasive was 53 cm wide by 61 cm long.

A nonwoven web approximately 3.8 cm wide was saturated with a binder precursor by means of a 5 cm wide knife coater with a gap setting of 0.23 mm. The knife coater was attached to a level winder and the nonwoven was helically wrapped onto the hub while the hub rotated at 5 rpm. Two layers of nonwoven were wrapped over the hub, the second layer was 180 degrees out of phase with the first. The adjacent wraps were applied such that they did appreciably overlap and the gap was less than 1 mm. Next, reinforcing strands or yarns were applied into the make coat precursors saturated nonwoven. The strands were first run through a tensioner and then wound through a comb, two at a time. The reinforcing fibrous strands were wrapped over the saturated nonwoven web by means of a yarn guide system with a level winder that moved across the face of the hub at a rate of 10 cm per minute. During this process, the hub rotated at 120 rpm. This resulted in the spacing of the reinforcing strands of 24 strands per cm of width. The reinforcing strands were normally of different materials. The strand spacing was changed by the increase or decrease in the speed of the yarn guide. After strands were wound in over the width of the hub, the hub was removed and placed in a batch oven on rotating spindles. The spindles rotated at 10 rpm. The hub was kept in the oven for 5 minutes at 110°C.

Afterwards, the hub was removed from the oven and mounted on a rotating shaft above a hot plate that was covered with abrasive particles. The hub acted as the ground plate. The abrasive particles had an average particle size of 286 micrometers (ANSI grade 60) and was a 15/85 blend of fused aluminum oxide and ceramic aluminum oxide. The ceramic aluminum oxide was made according to the teachings of U.S. Patent Nos. 4,314,827 and 4,881,951, and is available from Minnesota Mining and Manufacturing Co., St. Paul, MN ("3M") under the trade designation "Cubitron 321": The abrasive particle blend was performed according to U.S. Patent No. 4,734,104. The total abrasive particle weight was about 600 g/m². The hub rotated at 10 rpm during the activation of the electric field which coated the abrasive particles into the make coat precursor. After coating, the resulting construction was removed and placed in a batch oven on rotating spindles for 30 minutes at 100°C.

Next, the hub was mounted on a rotating shaft that rotated at 40 rpm. A size coat precursor was sprayed over the abrasive particles/make coat. The size coat precursor was 72% solids diluted with a 90/10 mixture of water and PS. The size coat precursor consisted of 32 parts of a resole phenolic resin, 66 parts of cryolite and 2 parts of iron oxide colorant. The size coat precursor weight was about 340 g/m². After spraying, the coated abrasive received a thermal cure of 60 minutes at 88°C.

After this thermal cure, the hub was remounted on the spray system and a supersize coating was sprayed over the size coat. The supersize coating consisted of 17 parts of CMD, 76 parts potassium tetrafluoroborate filler, 3 parts thickener, 2 parts iron oxide, 2 parts ERC. The overall supersize was 72% solids in water. The supersize wet weight was about 150 g/m². The resulting construction was then thermally cured for 60 minutes at 88°C and a final cure of 10 hours at 105°C. Prior to testing, the resulting coated abrasive was flexed by running over a 2.5 cm support bar and a raised spiral bar.

### Examples 1-12

This set of examples compared various coated abrasive constructions. The coated abrasives were made according to the General Procedure for Forming the Endless, Spliceless Coated Abrasive and were tested according to Test Procedure I. The test results can be found in Table 1.

### Example 1

The nonwoven mat was PET1NW and the make coat precursor consisted of 60% VIB, 28.5% CAT, 1.5% iron oxide colorant. The binder precursor was diluted to 90% with SOL. The two alternating reinforcing fibers were 235 denier nylon multifilament yarn, commercially available from DuPont, Wilmington, DE under the trade designation "DuPont Nylon, style 728 (210-34-R20)". The other alternating yarn was a fiberglass bobbin yarn 15000 yield, commercially available from PPG Industries Inc., Pittsburgh, PA under the trade designation of "ECG 150 1/0 0.7Z", style 930. The fiber spacing was 24 fibers per cm of width. The ratio of binder precursor to fibrous reinforcement was 4 to 1 (i.e., 80 weight percent binder precursor).

### Example 2

The coated abrasive of Example 2 was made in a similar manner to Example 1, except that the size coating precursor weight was 400 g/m².

### Example 3

The coated abrasive of Example 3 was made in a similar manner to Example 1, except that the binder precursor was not thermally heated for five minutes prior to the application of the abrasive particles.

### Example 4

The coated abrasive of Example 4 was made in a similar manner to Example 1, except that a layer of barrier coated A weight paper was wrapped around the hub prior to the first layer of the binder precursor coated nonwoven. This A weight paper had a weight of 70 g/m² and remained a part of the finished article.

### Example 5

The coated abrasive of Example 5 was made in a similar manner to Example 1, except that a layer of 3 mil (76 micrometer) thick polyester film having an ethylene acrylic acid copolymer primer was wrapped around the hub prior to the first layer of the binder precursor coated nonwoven. This film remained a part of the article.

### Example 6

The coated abrasive of Example 6 was made in a similar manner as Example 4, except that no reinforcing fibers were wound on top of the two layers of saturated nonwoven.

### Example 7

The coated abrasive of Example 7 was made in a similar manner of Example 1 except that three layers of nonwoven were used and no reinforcement fibers were wound in. Additionally, the abrasive particle weight was 1050 g/m².

### Example 8

The coated abrasive of Example 8 was made in a similar manner of Example 7 except there was no size coating precursor applied. After, the binder precursor was cured for 30 minutes at 88°C, the supersize coating precursor was sprayed over the abrasive particles and the make coat. Next, the resulting construction was thermally cured for one hour at 115°C, followed by flexing.

### Example 9

The coated abrasive of Example 9 was made in a similar manner of Example 1 except the size coating precursor was sprayed over the abrasive particles/binder precursor before the binder precursor was cured.

### Example 10

The coated abrasive of Example 10 was made in a similar manner of Example 1 except that the binder precursor consisted of 37.5 parts of UR1, 12.5% of solution of 35% methylene diamine/65% 1-methoxy -2-propyl acetate, 33% ER1 and 17% GEN. The binder precursor was diluted to 90% solids with SOL.

### Example 11

The coated abrasive of Example 11 was made in a similar manner of Example 1 except that the binder precursor consisted of 32 parts of ER1, 50 parts ACA, 7 parts LR1, 1 part AC. The binder precursor was diluted to 93% solids with SOL.

### Example 12

The coated abrasive belt for this Example 12 was made on the same equipment as Example 1. The binder precursor was a polyurethane thermoplastic. A 30 cm wide layer of solid polyurethane, 0.13 millimeters thick (known under the trade designation "HPR625FS" from Stevens Elastomers Corp, Northampton, MA) was helically wrapped on the hub. The reinforcement fibers were wound on top of this layer. A second layer of polyurethane was helically wrapped on top of the fibers. The hub was placed in an oven at 210°C for 30 minutes. The abrasive particles were preheated to 210°C and uniformly drop coated into the peripheral layer of the thermoplastic polyurethane. The hub was then removed from the oven and processed in a similar as Example 1 for size and supersize coatings.

### Comparative Example A

Comparative Example A was a commercially available spliced coated abrasive belt from 3M under the trade designation "3M 777F Regalite Polycut Resin Bond" cloth. This product comprised standard calcium carbonate filled phenol formaldehyde resins as make and size coatings and a KBF₄/epoxy supersize coating, and employed 286 micrometer average particle size ceramic aluminum oxide abrasive particles blended with fused alumina known under the trade designation "Cubitron 321", from 3M. The abrasive particles of the is product were present as a substantially continuous coating, i.e., there was no pattern of abrasive particles.

### Comparative Example B

The coated abrasive for Comparative Example B was made in a manner similar to Example 1 except that the binder precursor did not adhere the abrasive particles to the article. An additional coating was applied between the binder and the abrasive particles. After the article was formed as in Example 1 and thermally heated for 30 minutes at 110°C an additional coating was sprayed over the article. This additional coating was a standard calcium carbonate filled resole phenolformaldehyde. Next, the abrasive particles were electrostatically coated. The remaining steps to form the abrasive article are essentially the same as Example 1.

### Grinding Test Procedure

The coated abrasive belt (1.3 cm by 61 cm) was installed on a air powered abrasive belt machine (model #11000, from Dynabrade Inc. Clarence, NY). This belt machine had a 1" diameter x 3/8" wide (2.54 cm x 0.95 cm), radiused rubber contact arm, Model #11219, also available from Dynabrade. A 14" long by 3" wide by 1/2" thick (35.56 cm x 7.62 cm x 1.27 cm) 304 stainless steel bar was placed in a vise. Half moon shape cut was ground into the bar across the 1/2" (1.27cm) dimension, about 1" (2.54 cm) wide. The belt was used to grind the 1/2" (1.27 cm) wide surface continuously for 5 minutes or until the belt failed. The grinding pressure used was about 5-10 pounds per square inch (about 0.35 to 0.70 kg/cm²). The abrasive belt was weighed before and after the test. The bar was also weighed before and after the test. A generally preferred belt construction ground for a high cut rate with a minimal loss in belt weight (i.e., low amounts of shelling). The results listed in Table 1 were an average of two belts.

### Tensile Test Procedure

Strips of dimensions 2.5 cm by 17.8 cm were taken from endless, seamless articles of Examples 1-12. The tensile results can be found in Table 2. The strips were taken from the articles in two directions: machine direction (MD) and cross direction (CD) (normal to the machine direction).

These strips were tested for tensile strength using a tensile testing machine known under the designation "Sintech", which measured the amount of force required to break the strips. The machine had two jaws. Each end of a strip was placed in a jaw, and the jaws moved in opposite directions until the strip broke. In each test, the length of the strip between the jaws was 12.7 cm and the rate at which the jaws moved apart was 0.5 cm/sec. In addition to the force required to break the strip, the percent stretch of the strip at the break point was determined for both the machine and cross direction samples. "% stretch" was defined as [(final length minus original length)/original length], and this result was multiplied by 100.

**Table 1**

| Grinding Test Procedure | | | |
|---|---|---|---|
| Example | Time min:sec | % Belt Weight Loss | Cut % of Control |
| 1 | 5:00 | 26.9 | 99 |
| 2 | 4:45 | 21.0 | 91 |
| 3 | 4:15 | 20.8 | 84 |
| 4 | 4:45 | 20.6 | 95 |
| 5 | 3:45 | 17.4 | 73 |
| 6 | 0:30 | 8.3 | 8* |
| 7 | 0:30 | 5.5 | 8* |
| 8 | 3:15 | 29.0 | 37 |
| 9 | 5:00 | 30.0 | 97 |
| 10 | 1:45 | 37 | 37** |
| 11 | 1:15 | 39 | 33** |
| 12 | 2:15 | 36 | 51** |
| A | 4:45 | 21.3 | 100 |
| B | 3:00 | 36 | 56** |

| | | | |
|---|---|---|---|
| * There was excessive belt stretch. | | | |
| ** There was excessive shelling. | | | |

**Table 2**

| Tensile Test Results | | | | |
|---|---|---|---|---|
| Example | MD Tensile % Stretch kg/cm | | CD Tensile % Stretch kg/cm | |
| 1 | 31 | 2.7 | 4.5 | 23 |
| 2 | 34 | 3.0 | 3.9 | 25 |
| 3 | 34 | 2.8 | 4.6 | 18 |
| 4 | 39 | 3.0 | 9.8 | 8 |
| 5 | 43 | 3.0 | 16 | 18 |
| 6 | 5.5 | 3.6 | 7.7 | 7 |
| 7 | 8.6 | 54.6 | 7.1 | 36 |
| 8 | 38 | 3.3 | 6.0 | 30 |
| 9 | 37 | 3.1 | 3.7 | 18 |
| 10 | 37 | 2.8 | 6.2 | 4.4 |
| 11 | 37 | 3.1 | 6.2 | 4.7 |
| 12 | 45 | 2.9 | 4.7 | 225 |

## Claims

1. A coated abrasive article (10) comprising:
(a) a member (11) having first (A) and second major surfaces (B) and a middle portion extending between said major surfaces, said middle portion comprising an effective amount of a fibrous reinforcing material (12) engulfed in a single organic polymeric binder (13), the binder (13) defining a region adjacent said first major surface (A) substantially free of the fibrous reinforcing material (12);
(b) a plurality of abrasive particles (16) partially embedded in said binder (13) on said first major surface (A), the majority of said particles protruding from said binder and
(c) an optional size coating (17) overlying the abrasive particles (16) and binder (13) of said first major surface (A).

2. The article of claim 1 wherein said organic polymeric binder material (13) comprises from 40-99 wt-% of said member, based upon the weight of the member.

3. The article of claims 1 or 2 wherein the organic polymeric binder material (13) and the fibrous reinforcing material (12) together comprise a flexible composition in the form of an endless, seamless loop having a length with generally parallel side edges.

4. The article of claim 3 wherein the endless, seamless loop includes a plurality of noninterlocking layers (32,33) of fibrous reinforcing material engulfed within the organic polymeric binder material (34, 35).

5. The article of claim 4 wherein the fibrous reinforcing material comprises a layer of one continuous fibrous strand wrapped generally in the form of a helix in longitudinal extension around the length of the loop.

6. The article of any one of claims 1-5 wherein the fibrous reinforcing material comprises a layer of a fibrous mat structure (52) optionally with individual parallel fibrous strands (53) incorporated therein.

7. The article of any one of claims 1-6 wherein the organic polymeric binder (13) is a thermoplastic material, a thermosetting resin, or mixtures thereof.

8. The article of any one of claims 1 to 7 wherein the fibrous reinforcing material (12) comprises a plurality of fibrous reinforcing layers separated and adhered together by a corresponding plurality of organic polymeric binder layers (13), wherein each of the plurality of organic polymeric binder layers comprises a different organic polymeric binder.

9. The article of any one of claims 1-8 which is non-uniform throughout its length, width, or both its length and width, the non-uniformity occurring in one or more of the composition of the binder (13), the amount of the binder, and the amount of the reinforcing material (12).

10. The article of claim 9, the binder (13) further comprising a filler, in which the amount, composition, and location of the filler is non-uniform.

11. A method of making a coated abrasive (10), the method comprising:
(a) providing a fibrous reinforcing material (12);
(b) applying an organic polymeric binder precursor to the fibrous reinforcing material (12) in an amount sufficient to thereby engulf the reinforcing material with binder precursor and further provide a region of binder precursor substantially free of the reinforcing material;
(c) applying a plurality of abrasive particles (16) to the region of binder precursor substantially free of the reinforcing material (12) such that the abrasive particles protrude from the binder precursor, and
(d) exposing the construction of step (c) to conditions sufficient to solidify the binder precursor thereby forming a binder (13), wherein a majority of the abrasive particles (16) protrude out of the binder.

12. The method of claim 11 further comprising:
(a) applying a size coating precursor over the abrasive particles (16) and binder precursor wherein the binder precursor has not been solidified and is still in a flowable state; and
(b) exposing the construction resulting from step (a) to conditions sufficient to solidify the binder precursor and size coating precursor to form a binder and a size coating (17).

13. The method of claim 11 wherein the fibrous reinforcing material comprises a nonwoven fibrous substrate, the method comprising:
(a) saturating a nonwoven fibrous substrate with an organic polymeric binder precursor to form a saturated nonwoven;
(b) applying the saturated nonwoven to a support structure;
(c) applying alternating yarns of nylon and fiberglass over the saturated nonwoven while tensioning the yarns such that the yarns are pulled down into the saturated nonwoven, there being sufficient binder precursor to wet and engulf the yarns and still have an excess of binder precursor present to form a region substantially free of said nonwoven and said yarns, the nonwoven and yarns applied to the support structure in two layers, the two layers being out of phase to create a uniform structure;
(d) applying a plurality of abrasive particles to the region of binder precursor substantially free from said nonwoven and said yarns such that a majority of the abrasive particles protrude from the binder precursor, and
(e) exposing the construction of step (d) to conditions sufficient to solidify the binder precursor to form a binder.

14. The method of claim 11 wherein the fibrous reinforcing material comprises a nonwoven fibrous substrate, the method comprising:
(a) applying the nonwoven fibrous substrate to a support structure;
(b) applying alternating yarns of nylon and fiberglass over the nonwoven while tensioning the yarns such that the yarns are pulled down into the nonwoven, the yarns having been previously coated with a binder precursor, there being sufficient binder precursor to wet and engulf the yarns and still have an excess of binder precursor present to form a region substantially free of said nonwoven and said yarns, the nonwoven and yarns applied to the support structure in two layers, the two layers being out of phase to create a uniform structure;
(c) applying a plurality of abrasive particles to the region of binder precursor substantially free from said yarns and said nonwoven such that a majority of the abrasive particles protrude from the binder precursor; and
(d) exposing the construction of step (c) to conditions sufficient to solidify the binder precursor to form a binder.

15. The method of any one of claims 11-14 wherein said organic polymeric binder comprises about 40-99 wt-% of the total weight of the organic polymeric binder plus fibrous reinforcing material.

16. The method of any one of claims 11-15 wherein the organic polymeric binder and the fibrous reinforcing material together form a flexible, endless, seamless loop having a length with generally parallel side edges.

17. The method of claim 16 wherein the endless, seamless loop formed includes a plurality of noninterlocking layers of fibrous reinforcing material engulfed within the organic polymeric binder.

18. The method of claim 17 wherein the fibrous reinforcing material comprises a layer of one continuous fibrous stand wrapped generally in the form of a helix in longitudinal extension around the length of the loop.

19. The method of any one of claims 11-18 wherein the coated abrasive further includes a layer of a fibrous mat structure, optionally with individual parallel fibrous strands incorporated therein which is engulfed within the organic polymeric binder.

20. A continuous web process useful for producing seamed coated abrasives, the process comprising:
(a) traversing a nonwoven web material through a coating station to engulf the nonwoven in an organic polymeric binder precursor, thus forming a saturated nonwoven having a region of binder precursor substantially free of said nonwoven material;
(b) embedding a fibrous reinforcing yarn into the saturated nonwoven to form a region substantially free of said nonwoven material and said yarn;
(c) projecting via electrostatic forces a plurality of abrasive particles into the region of binder precursor substantially free of said nonwoven material and said yarn;
(d) exposing the construction resulting from step (c) to conditions sufficient to solidify the binder precursor to form a binder,
(e) applying a size coating precursor over the abrasive particles and the binder;
(f) exposing the construction resulting from step (e) to conditions sufficient to solidify the size coating precursor thus forming a size coated abrasive;
(g) optionally further processing the size coated abrasive by procedures such as additional curing, flexing and/or humidification; and
(h) converting the size coated abrasive into the desired form or shape.

21. The method of claim 20 wherein said organic polymeric binder comprises about 40-99 wt-% of the total weight of the organic polymeric binder plus fibrous reinforcing material.

22. The method of claims 20 or 21 wherein the organic polymeric binder and the fibrous reinforcing material together form a flexible, endless, seamless loop having a length with generally parallel side edges.

23. The method of claim 22 wherein the endless, seamless loop formed includes a plurality of noninterlocking layers of fibrous reinforcing material engulfed within the organic polymeric binder.

24. The method of claim 23 wherein the fibrous reinforcing material comprises a layer of one continuous fibrous strand wrapped generally in the form of a helix in longitudinal extension around the length of the loop.

25. The method of any one of claims 20 to 24 wherein the coated abrasive further includes a layer of a fibrous mat structure, optionally with individual parallel fibrous strands incorporated therein, which is engulfed within the organic polymeric binder.

## Patentansprüche

1. Beschichteter Schleifartikel (10), aufweisend:
(a) ein Teil (11) mit einer ersten Hauptfläche (A) und einer zweiten Hauptfläche (B) und einem sich zwischen den Hauptflächen erstreckenden Mittelabschnitt, wobei der Mittelabschnitt eine wirksame Menge eines in ein einziges organisches polymerisches Bindemittel (13) eingeschlossenen Faserverstärkungsmaterials (12) aufweist, wobei das Bindemittel (13) einen im wesentlichen von dem Faserverstärkungsmaterial (12) freien an die erste Hauptfläche (A) angrenzenden Bereich festlegt,
(b) mehrere Schleifteilchen (16), die teilweise in das Bindemittel (13) auf der ersten Hauptfläche (A) eingebettet sind, wobei die Mehrzahl der Teilchen aus dem Bindemittel vorstehen, und
(c) eine optionale Überbeschichtung (17), die über den Schleifteilchen (16) und dem Bindemittel (13) der ersten Hauptfläche (A) liegt.

2. Artikel nach Anspruch 1, wobei das organische polymerische Bindemittel (13) 40 - 99 Gew.-% des Teils auf Grundlage des Gewichts des Teils aufweist.

3. Artikel nach Anspruch 1 oder 2, wobei das organische polymerische Bindemittel (13) und das Faserverstärkungsmaterial (12) zusammen eine flexible Zusammensetzung in Form einer endlosen, nahtlosen Schleife mit einer im wesentlichen parallele Seitenränder aufweisenden Länge aufweisen.

4. Artikel nach Anspruch 3, wobei die endlose, nahtlose Schleife mehrere nicht miteinander verflochtene Schichten (32, 33) aus Faserverstärkungsmaterial aufweist, die in dem organischen polymerischen Bindemittel (34, 35) eingeschlossen sind.

5. Artikel nach Anspruch 4, wobei das Faserverstärkungsmaterial eine Schicht aus einem zusammenhängenden Faserstrang aufweist, der in Längsrichtung im allgemeinen schraubenförmig um die Länge der Schleife gewickelt ist.

6. Artikel nach einem der Ansprüche 1 - 5, wobei das Faserverstärkungsmaterial eine Schicht aus einer Fasermattenstruktur (52) aufweist, in die wahlweise einzelne parallele Faserstränge (53) aufgenommen sind.

7. Artikel nach einem der Ansprüche 1 - 6, wobei das organische polymerische Bindemittel (13) ein thermoplastisches Material, ein unter Wärme aushärtendes Harz, oder Mischungen davon ist.

8. Artikel nach einem der Ansprüche 1 bis 7, wobei das Faserverstärkungsmaterial (12) mehrere Faserverstärkungsschichten aufweist, die voneinander getrennt und durch entsprechende mehrere organische polymerische Bindemittelschichten (13) zusammengeklebt sind, wobei jede der mehreren organischen polymerischen Bindemittelschichten ein anderes organisches polymerisches Bindemittel aufweist.

9. Artikel nach einem der Ansprüche 1 - 8, der über seine ganze Länge, Breite oder sowohl über seine Länge als auch über seine Breite ungleichmäßig ist, wobei die Ungleichmäßigkeit in der Zusammensetzung des Bindemittels (13), der Menge des Bindemittels und/oder der Menge des Verstärkungsmaterials (12) auftritt.

10. Artikel nach Anspruch 9, wobei das Bindemittel (13) weiter einen Füllstoff aufweist, bei dem die Menge, die Zusammensetzung und der Ort ungleichmäßig sind.

11. Verfahren zum Herstellen eines beschichteten Schleifmittels (10), aufweisend:
(a) Bereitstellen eines Faserverstärkungsmaterials (12),
(b) Aufbringen einer organischen polymerischen Bindemittelvorstufe auf das Faserverstärkungsmaterial (12) in einer ausreichenden Menge, um das Verstärkungsmaterial mit der Bindemittelvorstufe einzuschließen und weiterhin einen Bereich der Bindemittelvorstufe bereitzustellen, der im wesentlichen von dem Verstärkungsmaterial frei ist,
(c) Aufbringen mehrerer Schleifteilchen (16) auf den Bereich der Bindemittelvorstufe, der im wesentlichen von dem Verstärkungsmaterial (12) frei ist, so daß die Schleifteilchen aus der Bindemittelvorstufe vorstehen, und
(d) Aussetzen der Konstruktion aus dem Schritt (c) gegenüber Bedingungen, die zum Verfestigen der Bindemittelvorstufe unter Bilden eines Bindemittels (13) ausreichen, wodurch die Mehrzahl der Schleifteilchen (16) aus dem Bindemittel vorsteht.

12. Verfahren nach Anspruch 11, weiter aufweisend:
(a) Aufbringen einer Überbeschichtungsvorstufe auf die Schleifteilchen (16) und die Bindemittelvorstufe, wobei die Bindemittelvorstufe nicht verfestigt wurde und sich noch in einem fließfähigen Zustand befindet, und
(b) Aussetzen der sich aus dem Schritt (a) ergebenden Konstruktion gegenüber Bedingungen, die zum Verfestigen der Bindemittelvorstufe und der Überbeschichtungsvorstufe unter Bildung einer Bindemittelbeschichtung und einer Überbeschichtung (17) ausreichen.

13. Verfahren nach Anspruch 11, wobei das Faserverstärkungsmaterial ein nicht gewebtes Fasersubstrat aufweist, mit den Schritten:
(a) Sättigen eines nicht gewebten Fasersubstrats mit einer organischen polymerischen Bindemittelvorstufe zur Bildung eines gesättigten nicht gewebten Materials,
(b) Aufbringen des gesättigten nicht gewebten Materials auf eine Tragstruktur,
(c) Aufbringen einander abwechselnder Garne aus Nylon und Glasfasern auf das gesättigte nicht gewebte Material, während die Garne so gespannt werden, daß sie in das gesättigte nicht gewebte Material hinuntergezogen werden, wobei es dort ausreichend Bindemittelvorstufe gibt, um die Garne zu befeuchten und einzuschließen, und wobei noch überschüssige Bindemittelvorstufe vorhanden ist, um einen Bereich zu bilden, der im wesentlichen frei von dem nicht gewebten Material und den Garnen ist, wobei das nicht gewebte Material und die Garne in zwei Schichten auf die Tragstruktur aufgebracht werden und die zwei Schichten unter Erzeugung einer gleichmäßigen Struktur phasenverschoben sind,
(d) Aufbringen mehrerer Schleifteilchen auf den von dem nicht gewebten Material und den Garnen im wesentlichen freien Bereich der Bindemittelvorstufe, so daß die Mehrzahl der Schleifteilchen aus der Bindemittelvorstufe vorsteht,
(e) Aussetzen der Konstruktion aus dem Schritt (d) gegenüber Bedingungen, die zum Verfestigen der Bindemittelvorstufe unter Bildung eines Bindemittels ausreichen.

14. Verfahren nach Anspruch 11, wobei das Faserverstärkungsmaterial ein nicht gewebtes Fasersubstrat aufweist, mit den Schritten:
(a) Aufbringen des nicht gewebten Fasersubstrats auf eine Tragstruktur,
(b) Aufbringen einander abwechselnder Garne aus Nylon und Glasfaser auf das nicht gewebte Material, während die Garne so gespannt werden, daß sie in das nicht gewebte Material hinuntergezogen werden, wobei die Garne zuvor mit einer Bindemittelvorstufe beschichtet worden sind, wobei es dort ausreichend Bindemittelvorstufe gibt, um die Garne zu befeuchten und einzuschließen, und wobei noch überschüssige Bindemittelvorstufe vorhanden ist, um einen Bereich zu bilden, der im wesentlichen frei von dem nicht gewebten Material und den Garnen ist, wobei das nicht gewebte Material und die Garne in zwei Schichten auf die Tragstruktur aufgebracht werden und die zwei Schichten unter Erzeugung einer gleichmäßigen Struktur phasenverschoben sind,
(c) Aufbringen mehrerer Schleifteilchen auf den von den Garnen und dem nicht gewebten Material im wesentlichen freien Bereich der Bindemittelvorstufe, so daß die Mehrzahl der Schleifteilchen aus der Bindemittelvorstufe vorsteht, und
(d) Aussetzen der Konstruktion aus dem Schritt (c) gegenüber Bedingungen, die zum Verfestigen der Bindemittelvorstufe unter Bildung eines Bindemittels ausreichen.

15. Verfahren nach einem der Ansprüche 11 - 14, wobei das organische polymerische Bindemittel etwa 40 - 99 Gew.-% des Gesamtgewichts des organischen polymerischen Bindemittels zuzüglich des Faserverstärkungsmaterials ausmacht.

16. Verfahren nach einem der Ansprüche 11 - 15, wobei das organische polymerische Bindemittel und das Faserverstärkungsmaterial zusammen eine flexible, endlose, nahtlose Schleife mit einer im wesentlichen parallele Seitenränder aufweisenden Länge bilden.

17. Verfahren nach Anspruch 16, wobei die gebildete endlose, nahtlose Schleife mehrere nicht miteinander verflochtene Schichten aus in das organische polymerische Bindemittel eingeschlossenem Faserverstärkungsmaterial aufweist.

18. Verfahren nach Anspruch 17, wobei das Faserverstärkungsmaterial eine Schicht aus einem zusammenhängenden Faserstrang aufweist, der in Längsrichtung im allgemeinen schraubenförmig um die Länge der Schleife gewickelt ist.

19. Verfahren nach einem der Ansprüche 11 - 18, wobei das beschichtete Schleifmittel weiter eine Schicht einer Fasermattenstruktur aufweist, in die wahlweise einzelne parallele Faserstränge aufgenommen sind und die in das organische polymerische Bindemittel eingeschlossen ist.

20. Kontinuierlicher Bahnprozeß, der zum Herstellen mit eines zusammenhängenden beschichteten Schleifmittels verwendbar ist, mit den Schritten:
(a) Hindurchführen eines nicht gewebten Bahnmaterials durch eine Beschichtungsstation, um das nicht gewebte Material in eine organische polymerische Bindemittelvorstufe einzuschließen und dadurch ein gesättigtes nicht gewebtes Material zu bilden, das einen im wesentlichen von dem nicht gewebten Material freien Bereich der Bindemittelvorstufe aufweist,
(b) Einbetten eines Faserverstärkungsgarns in das gesättigte nicht gewebte Material, um einen von dem nicht gewebten Material und dem Garn im wesentlichen freien Bereich zu bilden,
(c) Zuführen mehrerer Schleifteilchen durch elektrostatische Kräfte in den von dem nicht gewebten Material und dem Garn im wesentlichen freien Bereich der Bindemittelvorstufe,
(d) Aussetzen der sich aus dem Schritt (c) ergebenden Konstruktion gegenüber Bedingungen, die zum Verfestigen der Bindemittelvorstufe unter Bildung eines Bindemittels ausreichen,
(e) Aufbringen einer Überbeschichtungsvorstufe auf die Schleifteilchen und das Bindemittel,
(f) Aussetzen der sich aus dem Schritt (e) ergebenden Konstruktion gegenüber Bedingungen, die zum Verfestigen der Überbeschichtungsvorstufe unter Bildung eines überbeschichteten Schleifmittels ausreichen,
(g) wahlweises Weiterverarbeiten des überbeschichteten Schleifmittels durch Prozeduren, wie ein zusätzliches Härten, Biegen und/oder Befeuchten, und
(h) Umwandeln des leimbeschichteten Schleifmittels derart, daß es die gewünschte Form oder Gestalt annimmt.

21. Verfahren nach Anspruch 20, wobei das organische polymerische Bindemittel etwa 40 - 99 Gew.-% des Gesamtgewichts des organischen polymerischen Bindemittels zuzüglich des Faserverstärkungsmaterials ausmacht.

22. Verfahren nach Anspruch 20 oder 21, wobei das organische polymerische Bindemittel und das Faserverstärkungsmaterial zusammen eine flexible, endlose, nahtlose Schleife mit einer im wesentlichen parallele Seitenränder aufweisenden Länge bilden.

23. Verfahren nach Anspruch 22, wobei die gebildete endlose, nahtlose Schleife mehrere nicht miteinander verflochtene Schichten aus in das organische polymerische Bindemittel eingeschlossenem Faserverstärkungsmaterial aufweist.

24. Verfahren nach Anspruch 23, wobei das Faserverstärkungsmaterial eine Schicht aus einem zusammenhängenden Faserstrang aufweist, der in Längsrichtung im allgemeinen schraubenförmig um die Länge der Schleife gewickelt ist.

25. Verfahren nach einem der Ansprüche 20 - 24, wobei das beschichtete Schleifmittel weiter eine Schicht einer Fasermattenstruktur aufweist, in die wahlweise einzelne parallele Faserstränge aufgenommen sind und die in das organische polymerische Bindemittel eingeschlossen ist.

## Revendications

1. Article abrasif sur support (10) comprenant :
(a) un élément (11) ayant une première (A) et une seconde (B) surfaces principales et une portion médiane s'étendant entre lesdites surfaces principales, ladite portion médiane comprenant une quantité efficace d'un matériau de renforcement fibreux (12) enrobée dans un liant polymérique organique unique (13), le liant (13) définissant une région adjacente à ladite première surface principale (A) essentiellement exempte du matériau de renforcement fibreux (12).
(b) une multiplicité de particules abrasives (16) partiellement enrobées dans ledit liant (13) sur Ladite première surface principale (A), et la majorité desdites particules dépassant dudit liant et
(c) un revêtement d'encollage facultatif (17) recouvrant les particules abrasives (16) et le liant (13) de ladite première surface principale (A).

2. Article selon la revendication 1 dans lequel ledit matériau de liant polymérique organique (13) constitue entre 40 et 99% en poids dudit élément, sur la base du poids de l'élément.

3. Article selon la revendication 1 ou 2 dans lequel le matériau de liant polymérique organique (13) et le matériau de renforcement fibreux (12) forment ensemble une composition flexible sous la forme d'une boucle sans fin, sans couture ayant des bords latéraux généralement parallèles dans la longueur.

4. Article selon la revendication 3 dans lequel la boucle sans fin, sans couture comprend une multiplicité de couches ne s'interpénétrant pas (32,33) de matériau de renforcement fibreux enrobé à l'intérieur du matériau de liant polymérique organique (34,35).

5. Article selon la revendication 4 dans lequel le matériau de renforcement fibreux comprend une couche d'un ruban fibreux continu enroulé généralement en forme-d'hélice dans le sens longitudinal autour de la longueur de la boucle.

6. Article selon l'une quelconque des revendications 1 à 5 dans lequel le matériau de renforcement fibreux comprend une couche ayant une structure de matelas fibreux (52) avec éventuellement des torons fibreux parallèles (53) incorporés à l'intérieur.

7. Article selon l'une quelconque des revendications 1 à 6 dans lequel le liant polymérique organique (13) est un matériau thermoplastique, une résine thermodurcissable ou des mélanges de ceux-ci.

8. Article selon l'une quelconque des revendications 1 à 7 dans lequel le matériau de renforcement fibreux comprend une multiplicité de couches de renforcement fibreuses séparées et collées ensemble par une multiplicité correspondante de couches de liant polymérique organique (13), dans lequel chacune de la multiplicité de couches de liant polymérique organique comprend un liant polymérique organique différent.

9. Article selon l'une quelconque des revendications 1 à 8 qui est non homogène dans sa longueur, sa largeur, ou à la fois dans sa longueur et sa largeur, la non-homogénéité apparaissant dans un ou plusieurs des facteurs : composition du liant (13), quantité du liant, et quantité du matériau de renforcement (12).

10. Article selon la revendication 9, le liant (13) comprenant en outre une charge, dans lequel la quantité, la composition, et l'emplacement de la charge sont non homogènes.

11. Procédé de fabrication d'un abrasif appliqué (10), le procédé comprenant les opérations consistant à :
(a) prendre un matériau de renforcement fibreux (12) ;
(b) à déposer un précurseur de liant polymérique organique sur le matériau de renforcement fibreux (12) en une quantité suffisante pour enrober ainsi le matériau de renforcement avec le précurseur de liant et de plus former une région de précurseur de liant essentiellement dénuée de matériau de renforcement ;
(c) à déposer une multiplicité de particules abrasives (16) sur la région de précurseur de liant essentiellement dénuée de l'agent de renforcement (12) de manière à ce que les particules abrasives dépassent du précurseur de liant ; et
(d) à exposer la structure de l'étape (c) à des conditions suffisantes pour solidifier le précurseur de liant et à former ainsi un liant (13) dans lequel une majorité des particules abrasives (16) dépassent du liant.

12. Procédé selon la revendication 11 comprenant en outre les étapes consistant à :
(a) déposer un précurseur de revêtement d'encollage sur les particules abrasives (16) et le précurseur de liant le précurseur de liant n'ayant pas été solidifié et étant encore dans un état apte à l'écoulement ; et
(b) à exposer la structure résultant de l'étape (a) à des conditions suffisantes pour solidifier le précurseur de liant et le précurseur de revêtement d'encollage pour former un liant (13) et un revêtement d'encollage (17).

13. Procédé selon la revendication 11 dans lequel le matériau de renforcement fibreux comprend un substrat fibreux non tissé, le procédé comprenant les étapes consistant à :
(a) saturer un substrat fibreux non-tissé avec un précurseur de liant polymérique organique pour former un non tissé saturé ;
(b) à appliquer le non-tissé saturé sur une structure support ;
(c) à appliquer alternativement des fils de nylon et de fibre de verre sur le non-tissé saturé tout en mettant les fils sous tension de manière à ce que les fils soient tirés vers le bas dans le non-tissé saturé, de manière à ce qu'il y ait suffisamment de précurseur de liant pour mouiller et enrober les fils et qu'il y ait encore un excès de précurseur de liant présent pour former une région essentiellement dénuée dudit non-tissé et desdits fils, le non-tissé et les fils étant appliqués sur la structure du support en deux couches, les deux couches n'étant pas en phase pour créer une structure uniforme ;
(d) à appliquer une multiplicité de particules abrasives dans la région de précurseur de liant essentiellement dénuée dudit non-tissé et desdits fils de manière à ce qu'une majorité des particules abrasives dépassent du précurseur de liant ; et
(e) à exposer la structure de l'étape (d) à des conditions suffisantes pour solidifier le précurseur de base et former un liant.

14. Procédé selon la revendication 11 dans lequel le matériau de renforcement fibreux comprend un substrat fibreux non-tissé, le procédé comprenant les étapes consistant à :
(a) déposer le substrat fibreux non-tissé sur une structure support ;
(b) à appliquer alternativement des fils de nylon et de fibre de verre sur le non-tissé tout en mettant les fils sous tension de manière à ce que les fils soient tirés vers le bas dans le non-tissé, les fils ayant été au préalable revêtus d'un précurseur de liant, le liant étant en quantité suffisante pour mouiller et enrober les fils et qu'il y ait encore un excès de précurseur de liant présent pour former une région essentiellement dénuée dudit non-tissé et desdits fils, le non-tissé et les fils étant appliqués sur la structure du support en deux couches, les deux couches n'étant pas en phase pour créer une structure uniforme ;
(c) à appliquer une multiplicité de particules abrasives dans la région de précurseur de liant essentiellement dénuée dudit non-tissé et desdits fils de manière à ce qu'une majorité des particules abrasives dépasse du précurseur de liant ; et
(d) à exposer la structure de l'étape (c) à des conditions suffisantes pour solidifier le précurseur de base et former un liant.

15. Procédé selon l'une quelconque des revendications 11 à 14 dans lequel ledit liant polymérique organique constitue environ de 40 à 99% en poids du poids total du liant polymérique organique plus le matériau de renforcement fibreux.

16. Procédé selon l'une quelconque des revendications 11 à 15 dans lequel le liant polymérique organique et le matériau de renforcement fibreux forment ensemble une boucle flexible, sans fin, sans couture ayant des bords latéraux généralement parallèles dans la longueur.

17. Procédé selon la revendication 16 dans lequel la boucle flexible, sans fin, formée sans couture comprend une multiplicité de couches ne s'interpénétrant pas de matériau de renforcement fibreux enrobé à l'intérieur du liant polymérique organique.

18. Procédé selon la revendication 17 dans lequel le matériau de renforcement fibreux comprend une couche d'un ruban fibreux continu enroulé généralement en forme d'hélice dans le sens longitudinal autour de la longueur de la boucle.

19. Procédé selon l'une quelconque des revendications 11 à 18 dans lequel l'abrasif appliqué comprend en outre une couche ayant une structure de matelas fibreux avec éventuellement des torons fibreux parallèles incorporés à l'intérieur, qui est enrobée à l'intérieur du liant polymérique organique.

20. Procédé de fabrication de tissu en continu utile pour produire des abrasifs appliqués assemblés, le procédé comprenant les étapes consistant à :
(a) faire passer un matériau de tissu non-tissé à travers une station d'enduction pour enrober le non-tissé dans un précurseur de liant polymérique organique, et former ainsi un non-tissé saturé ayant une région de précurseur de liant essentiellement dénuée dudit matériau non-tissé ;
(b) à enrober un fil de renforcement fibreux à l'intérieur du non-tissé saturé pour former une région essentiellement dénuée dudit matériau non-tissé et dudit fil ;
(c) à projeter au moyen de forces électrostatiques une multiplicité de particules abrasives dans la région de précurseur de liant essentiellement dénuée dudit matériau non-tissé et dudit fil ;
(d) à exposer la structure résultant de l'étape (c) à des conditions suffisantes pour solidifier le précurseur de liant et former un liant.
(e) à déposer un précurseur de revêtement d'encollage sur les particules abrasives et le liant ;
(f) à exposer la structure résultant de l'étape (e) à des conditions suffisantes pour solidifier le précurseur de revêtement d'encollage et former un abrasif à surface revêtue ;
(g) à éventuellement poursuivre le traitement de l'abrasif à surface revêtue par des procédures telles qu'une cuisson supplémentaire, une flexion et/ou une humidification ; et
(h) à mettre l'abrasif à surface revêtue sous la forme ou la configuration désirée.

21. Procédé selon la revendication 20 dans lequel ledit liant polymérique organique constitue environ de 40 à 99% en poids du poids total du liant polymérique organique et du matériau de renforcement fibreux.

22. Procédé selon la revendication 20 ou 21 dans lequel le liant polymérique organique et le matériau de renforcement fibreux forment ensemble une boucle flexible sans fin, sans couture ayant des bords latéraux généralement parallèles dans la longueur.

23. Procédé selon la revendication 22 dans lequel la boucle flexible sans fin, formée sans couture comprend une multiplicité de couches ne s'interpénétrant pas de matériau de renforcement fibreux enrobé à l'intérieur du liant polymérique organique.

24. Procédé selon la revendication 23 dans lequel le matériau de renforcement fibreux comprend une couche d'un ruban fibreux continu enroulé généralement en forme d'hélice dans le sens longitudinal autour de la longueur de la boucle.

25. Procédé selon l'une quelconque des revendications 20 à 24 dans lequel l'abrasif appliqué comprend en outre une couche d'une structure de matelas fibreux, ayant éventuellement des torons fibreux parallèles incorporés à l'intérieur qui est enrobé à l'intérieur du liant polymérique organique.
